(19) Europäisches Patentamt
European Patent Office
Office européen des brevets

(11) **EP 2 707 745 B1**

(12) **EUROPÄISCHE PATENTSCHRIFT**

(45) Veröffentlichungstag und Bekanntmachung des Hinweises auf die Patenterteilung:
**29.11.2017 Patentblatt 2017/48**

(51) Int Cl.:
*G01S 7/497* [(2006.01)]   *G01S 17/42* [(2006.01)]
*G01C 15/00* [(2006.01)]

(21) Anmeldenummer: **12721498.9**

(22) Anmeldetag: **10.05.2012**

(86) Internationale Anmeldenummer:
**PCT/EP2012/058656**

(87) Internationale Veröffentlichungsnummer:
**WO 2012/156277 (22.11.2012 Gazette 2012/47)**

(54) **KALIBRIERVERFAHREN FÜR EIN GERÄT MIT SCANFUNKTIONALITÄT**

CALIBRATION METHOD FOR A DEVICE WITH SCAN FUNCTIONALITY

PROCÉDÉ DE CALIBRAGE POUR UN APPAREIL DOTÉ D'UNE FONCTIONNALITÉ DE BALAYAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.05.2011 EP 11165971**

(43) Veröffentlichungstag der Anmeldung:
**19.03.2014 Patentblatt 2014/12**

(73) Patentinhaber: **Hexagon Technology Center GmbH**
**9435 Heerbrugg (CH)**

(72) Erfinder:
• **HINDERLING, Jürg**
**CH-9437 Marbach (CH)**
• **GORDON, Bianca**
**88138 Weissensberg (DE)**
• **WALSER, Bernd**
**CH-9435 Heerbrugg (CH)**

(74) Vertreter: **Kaminski Harmann Patentanwälte AG**
**Landstrasse 124**
**9490 Vaduz (LI)**

(56) Entgegenhaltungen:
**DE-U1-202006 005 643    US-A1- 2011 023 578
US-B2- 7 623 224**

EP 2 707 745 B1

**Beschreibung**

Die Erfindung betrifft ein Feld-Kalibrierverfahren für ein Gerät mit Scanfunktionalität zur räumlichen Vermessung von Objekten nach dem Oberbegriff von Anspruch 1, sowie ein Gerät mit Scanfunktionalität nach dem Oberbegriff des Anspruchs 10.

3D-Scannen ist eine sehr wirkungsvolle Technologie um innerhalb von Minuten oder Sekunden Millionen von räumlichen Messpunkten von Objekten zu produzieren. Nach und nach werden terrestrische 3D-Scanner auch für klassische Vermessungsaufgaben und -projekte eingesetzt. Zurzeit haben diese Scanner jedoch noch einige Mängel oder Nachteile, wie beispielsweise einen im geodätischen Vermessungswesen unüblichen Arbeitsablauf im Feld, eine ungenügende Messgenauigkeit oder die Notwendigkeit einer nachfolgenden Datenverarbeitung im Büro zur Aufarbeitung der gewünschten Messergebnisse.

Etablierte Hersteller von Laserscanner sind inzwischen damit beschäftigt, das Workflow-Management von 3D-Scannern den Bedürfnissen der klassischen Vermessung anzupassen. Ein erster Schritt dabei ist eine Verkleinerung der Scanner-vorrichtungen sowie eine Verbesserung deren Robustheit, um deren Feldeinsatz, in harschen Umgebungen wie beispielsweise auf Baustellen, zu ermöglichen. Portabilität sowie eine flexible und rasche Aufstellung der Messgeräte sind wesentliche Bedürfnisse bei Vermessungsapplikationen. Beispiele solcher Scanner-Vorrichtungen sind TRIMBLE GX 3D, Faro Photon 120 oder ScanStation C10 von Leica Geosystems, wie beispielsweise in DE 20 2006 005643 U1 oder US 2009/147319 beschrieben.

Für klassische Vermessungsaufgaben, wie beispielsweise eine Aufnahme von Gebäuden oder Tiefbaueinrichtungen, weisen derartige Scanner aus dem Stand der Technik häufig eine zu geringe Messgenauigkeit auf. Besonders bei Stahlbauten sind hohe Punktgenauigkeiten unumgänglich, da die dabei verwendeten Bauelemente meist enge Masstoleranzen erfordern. Daher wird versucht, mit jeder Entwicklungs-Generation derartiger Scannervorrichtungen eine höhere Messgenauigkeit zu erzielen, auch um neue Märkte und weitere Vermessungsaufgaben abdecken zu können.

Beispiele für in jüngster Zeit aufkommenden Scanner-Anwendungen sind:

- Monitoring und Überwachung bestehender Bauwerke bezüglich Formänderung, Setzung, Neigung, etc.;

- Monitoring des Baufortschritts auf Baustellen, sowie Überwachung der Masshaltigkeit der ausgeführten Arbeiten;

- Unterstützung beim Einrichten und Ausrichten verschiedenster Bauteile auf Baustellen, wie beispielsweise Säulen, Rohrleitungen, Durchbrüchen, Fenstern, Türen, Fertigbetonteilen, etc.;

- Bestandsaufnahmen von bestehenden Gebäuden zur planlichen Darstellung oder 3D-Modellierung, beispielsweise bei der Planung von Um- oder Zubauten;

- forensische/kriminaltechnische Anwendungen, beispielsweise zur digitalen Rekonstruktion von Vorgängen an Tatorten oder Unfallschauplätzen;

- klassische Vermessungsaufgaben wie Geländeaufnahmen, Raumplanung, Aussteckung von Bauwerken, Kontrolle von Bebauungsvorschriften, etc.;

- Historische Restaurationen.

Vom prinzipiellen Aufbau her sind derartige Scanner ausgebildet, um mittels eines, meist elektro-optischen und laserbasierten, Entfernungsmessers eine Distanz zu einem Messpunkt zu erfassen. Eine ebenfalls vorhandene Richtungs-Ablenkeinheit ist dabei derart ausgebildet, dass der Messstrahl des Entfernungsmessers in zumindest zwei Raumrichtungen abgelenkt wird, wodurch ein räumlicher Messbereich aufgenommen werden kann. Die Ablenkeinheit kann in Form eines bewegten Spiegels oder alternativ auch durch andere, zur gesteuerten Winkelablenkung von optischer Strahlung geeignete Elemente, wie beispielsweise verdrehbare Prismen, bewegliche Lichtleiter, verformbare optische Komponenten etc. realisiert werden. Die Messung erfolgt meist unter Bestimmung von Entfernung und Winkeln, also in Kugelkoordinaten, welche zur Darstellung und Weiterverarbeitung auch in kartesische Koordinaten transformiert werden können. Der Entfernungsmesser kann beispielsweise nach den Prinzipien der Time-Of-Flight-(TOF), Phasen-, Wave-Form-Digitizer- (WFD) oder interferometrischen Messung ausgeführt sein. Für schnelle und genaue Scanner ist insbesondere eine kurze Messzeit bei gleichzeitig hoher Messgenauigkeit gefordert, beispielsweise eine Distanzgenauigkeit im mm-Bereich oder darunter bei Messzeiten der Einzelpunkte im Bereich von Mikrosekunden oder Millisekunden.

Vielfach verfügen die in Scannern verwendeten Distanzmesser über interne Referenzstrecken, sodass eine Kalibrierung der Distanzmessung, insbesondere des Distanzoffsets, anhand dieser erfolgen kann und somit eine hohe Genauigkeit der Distanzmessung erzielbar ist. Der Steigungs- oder Skalierungsfehler ist bei heutigen Distanzmessern oft viel kleiner als 1ppm, somit ist eine Nachkalibrierung selten notwendig. Der Distanzoffset hingegen kann sich über die Zeit verändern, Feldkalibrierungen dafür sind heute durchwegs bekannt. Die Punktgenauigkeit von Scannern, als maximale 3D-Distanzabweichung und somit Fehler des vermessenen Punktes im Raum, war bei älteren Geräten oft durch die Messgenauigkeit des Distanzmessers limitiert. Genauere Distanzmessungen erforderten entsprechend längere Messzeiten, wodurch mit einer Erhöhung der Distanzmessgenauigkeiten eine Reduktion der Mess- oder Scangeschwindigkeit, als vermessene Raumpunkte pro Zeiteinheit, einherging. Durch Fortschritte im Bereich der elektro-optischen Distanzmessung sind heute schnelle bis ultraschnelle Laserdistanzmesser mit dennoch hoher Distanzmessgenauigkeit verfügbar.

Das kritische Glied des Gesamtsystems in Bezug auf die Punktgenauigkeit hat sich somit von der Distanzmessgenauigkeit in den Bereich der Winkelmessgenauigkeit verlagert. Um die erhöhten Genauigkeitsanforderungen erfüllen zu können, ist auch die Langzeitstabilität des opto-mechanischen Systems immer mehr von Bedeutung.

Handelsübliche Scanner mit hoher Genauigkeit erreichen heute eine Punktgenauigkeit im Bereich von 5 bis 20 mm bei Messdistanzen unter 200 m. Für Distanzen bis zu 50 m sind 2 bis 6 mm bzw. für Messdistanzen kleiner als 25 m etwa 1 bis 4 mm durchaus erreichbare Punktgenauigkeiten. Bezogen auf die Richtungs- oder Winkelmessgenauigkeit entspricht beispielsweise eine Strecke von 5 mm in einem Abstand von 50 m einer Winkelmessgenauigkeit von 20" (Winkelsekunden) oder etwa 100 $\mu$rad, was im Stand der Technik bereits eine hohe Winkelmessgenauigkeit darstellt.

Derzeit am Markt erhältliche Scanner von höchster Präzision sind durchaus in eine Produktklasse mit einer Genauigkeit zwischen 8" und 12" einzuordnen, jedoch sind derartige Scannervorrichtungen mit einer spezifizierten Richtungs- oder Winkelmesspräzision von besser als 20", und insbesondere von besser 12", mit neuen Problemen konfrontiert, welche bei weniger präzisen Scannern nicht oder nur von untergeordneter Bedeutung sind. Ein 3D-Scanner mit der oben angeführten, hohen spezifizierten Winkelmessgenauigkeit erfordert sorgfältigen Umgang bei der Handhabung, Anwendung und Pflege, um diese Genauigkeit zu erhalten. Insbesondere bei mobilen, tragbaren Vorrichtungen für den Feldeinsatz ist mit Einflüssen aus der Umwelt, wie beispielsweise direkte Sonneneinstrahlung, Stösse, Schläge, etc. zu rechnen, welche zu mechanischen Verstellungen und einer damit einhergehenden reduzierten Messgenauigkeit führen können. Derartige Hochpräzisions-Scanner sind aus diesen Gründen zwar für einen Laboreinsatz, nicht jedoch für einen Feldeinsatz geeignet.

Bekannte Scanner ermöglichen es dem Endanwender auch nicht mit vernünftigem Aufwand im Feld die Genauigkeit des Instruments überprüfen, wie er dies von klassischen Messgeräten gewohnt ist. Eine Genauigkeitsgarantie kann ihm bestenfalls der Hersteller geben, was aber zeit- und kostenintensive, kurze Prüfintervalle und Rekalibrierung im Werk erforderlich macht. Die beim Hersteller, an einem dafür entsprechend ausgerüsteten Institut oder an einer staatlichen Prüfstelle ermittelten Achsenfehler-Werten (bspw. in Form von Winkeln und Abständen (Offsets)), werden meist direkt in die Instrumentensoftware eingegeben und gespeichert.

Um scannende Messsysteme mit einem polarem Messprinzip, wie ein terrestrischer Laserscanner, auch verstärkt in die geodätische Praxis einzuführen, wurden Ansätze entwickelt, um auch bei diesen Geräten Untersuchungen zur Kalibrierung und zur Überprüfung der Messgenauigkeit durchzuführen.

Dabei wird jedoch bei der Fehlerbestimmung im Allgemeinen von einem zum tachymetrischen Messprinzip analogen Aufbau ausgegangen. Scannern weisen jedoch einen gänzlich anderen Aufbau auf, weshalb ein derartiger Ansatz nicht zutreffend ist. Insbesondere die Fehlereinflüsse der Laserachse können sich wesentlich von denjenigen einer klassischen Zielachse unterscheiden.

Beispielsweise benutzt ein bekanntes Kalibrierverfahren ein Set von im Raum angeordneten Ebenen, welche in unterschiedlichen Instrumentenaufstellungen mehrmals gescannt werden. Aufbauend auf den bekannten Algorithmen der Standpunktverknüpfungen bestimmt das Kalibrierverfahren anhand der identischen Objektebenen unter Zuhilfenahme einer oder mehreren Ausgleichsrechnungen die Genauigkeit des Systems bzw. Kalibrierparameter.

Zur Registrierung von gescannten Punktwolken, als Verknüpfung der Messdaten aus einzelnen Scanndurchläufen in unterschiedlichen Scanneraufstellungen, kann eine Transformation (bspw. Helmert-Transformation) über identische Punkte durchgeführt werden. Die identischen Punkte werden aus den Daten der gescannten Zielmarken abgeleitet, wobei jedoch handelsüblichen Zielmarken oder Targets von einem Scanner oft nicht mit der hierzu erforderlichen Genauigkeit vermessbar sind. Auch wäre eine Genauigkeitsbestimmung in jener Aufstellung, in welcher anschliessend auch die Messung stattfindet, den häufigen Standortwechseln dieses Verfahren vorzuziehen. Der gesamte Kalibriervorgang ist recht aufwendig, da für eine ausreichend genaue Bestimmung der Instrumentenfehler beispielsweise mehr als zehn Ebenen in wenigstens drei Aufstellungen benötigt werden, was für einen routinemässigen Feldeinsatz in der Geodäsie unpraktikabel ist.

Ein anderes bekanntes Verfahren nutzt ein bekanntes, hochgenaues Referenzpunktfeld (Tie-Points), welches beispielsweise in einer Halle in Form einer Vielzahl von reflektierenden Zielmarken an den Wänden und an der Decke angebracht ist. Die Koordinaten dieser reflektierenden Zielmarken werden vorgängig mit einem höchstpräzisen Koordinatenmessgerät wie einem Theodoliten genau eingemessen und anschliessend werden diese genau bekannten Sollkoordinaten mit den Scannerdaten durch ein mathematisches Kalibriermodell in Beziehung gesetzt. Ein derartiges Vorgehen ist für den allgemeinen Feldeinsatz zu aufwendig und daher nicht praktikabel. Ein weiterer Nachteil ist die zusätzliche Verfälschung der Winkelkalibration durch Latenzzeiten in der Synchronisation zwischen Winkel- und Distanzmessung. Durch den dynamischen Scannprozess, insbesondere bei Scannern mit schneller Rotationsachse von typisch 100Hz, werden die ermittelten Raumkoordinaten von Referenzobjekten oder -Punkten verfälscht. Ein Synchronisationsdelay von beispielsweise 100ns in einem sich mit 100Hz drehenden Scanner, erzeugt bereits einen, zur Scannbewegung tangentialen, Objektversatz von 13 Winkelsekunden. Dieser Fehler schlägt sich bei obigem Verfahren als Indexfehler bei der Bestimmung der Kalibrierparameter nieder.

Weiters bekannt ist das in der Geodäsie bei elektronischen Theodoliten gebräuchliche Verfahren der Umschlagsmessung, welches wie folgt abläuft: Mittels der Visiereinrichtung wird eine oder mehrere Zielmarken in zwei Fernrohrlagen exakt zentrisch und sekundengenau, also mit einer Genauigkeit im Bereich von einigen wenigen Winkelsekunden oder darunter, angemessen. Aus den zu den exakten Anzielungen zugehörigen Messwinkeln, lassen sich die achsenrelevanten Systemparameter bestimmen bzw. die Systemgenauigkeit verifizieren. Das System wird dabei im Ausgangszustand in einer Richtung von (X,Y) gon und in einem rotierten Zustand bei ca. (X+200,400-Y) gon verwendet, wobei alle fehlerbehafteten, richtungsbestimmenden Elemente wie die Stehachse, die Kippachse, und insbesondere die Zielachse der Visiereinrichtung rotiert werden. Etwa befasst sich US 7,623,224 oder US 2011/023 578 mit der Aufgabe einen Video-Theodoliten oder Tachymeter auf derartige Weise zu kalibrieren.

Nach diesem Prinzip ist eine Vielzahl von Fehlern bestimmbar, welche sich bei Theodoliten oder analog aufgebauten Instrumenten im Wesentlichen durch folgende Kalibrierparameter darstellen lassen:

l ,q:    Indexfehler des 2-Achsen-Neigungssensors, beziehungs-weise der Stehachsen-Schiefe

i:    Indexfehler (Winkeloffset) des Vertikal-Winkelsensors

c:    Kollimationsfehler der Ziellinie

k:    Kippachsen-Schiefe

Ein Modell mit einer solchen oder analogen Parametrierung wird im Folgenden auch als Theodolitenmodell bezeichnet.

Beispielsweise wird die Bestimmungen von Index- und Kolliationsfehler mittels einer Zwei-Lagenmessung mit vorzugsweise horizontaler Ziellinie durchgeführt, weil in dieser Anordnung sich diese beiden Fehlertypen von den Einflüssen der anderen Parameter weitgehend separieren lassen.

Zwar ist es mit einem Laserscanner grundsätzlich auch möglich, ein Objekt wie oben beschrieben in zwei Lagen des Sensorkopfes zu scannen, jedoch können die Einflüsse der Winkelfehler und der Abstände (Offsets) der Scanner-Achsen unter Verwendung von Punktwolken aus erster und zweiter Lage nicht in derselben Form ermittelt und eliminiert werden. Zum einen, da aufgrund der gerasterten, flächenhaften Anmessung eine genaue Punktzuordnung nicht immer gegeben ist, dies vor allem bei Punktdichten im Raster von 5mm und gröber. Zum anderen, da die Kalibriermodelle durchwegs vom Theodoliten- oder Tachymetermodell übernommen sind, und diese das Messsystem eines Scanners nicht korrekt beschreiben. Es werden somit nicht real existierende oder gar unzulässige Instrumenten-Parameter bestimmt und zudem deren Einflüsse auf die Koordinatenabweichungen inkorrekt modelliert, was per se nicht zu den erhofften Verbesserungen führen kann.

Im Stand der Technik ist beispielsweise bekannt, zur Umschlagsmessung bei Scannern wenigstens sechs weisse Markierkugeln aus Holz als Prüfkörper in einem Scannvorgang in zwei Lagen aufzunehmen. Als Messwerte liegen dabei die Koordinaten der erfassten Ausschnitte der Kugeloberflächen vor, aus denen die Koordinaten der Kugelmittelpunkte berechnet und anschliessend durch Modellierung und Ausgleichsrechnung die Achsenfehler ermittelt werden. Die Bestimmung der Koordinaten von Kugelmittelpunkten mittels Scannern ist jedoch durchwegs mit grossen Fehlern behaftet. Beispielsweise sind mit den bekannten, dreidimensionalen Prüfobjekten bei 50 m Abstand bestenfalls systematische Fehler von etwa 3 mm erzielbar, wobei die Standardabweichung in etwa derselben Grössenordnung liegt. Insbesondere gemeinsam mit einem zugrunde gelegten Gerätemodell, welches das Achsensystem des Scanners nicht richtig beschreibt, ist somit keine präzise Kalibrierung möglich. Die oben genannten Genauigkeiten reichen schlichtweg nicht aus, um Fehler des Achsensystems eines Scanners zu kalibrieren.

Für eine hochgenaue Fehlerbestimmung sind, selbst bei dem weiter oben erwähnten hochgenau bekannten Referenzpunktfeld, die Residuen bzw. die Rauschanteile für eine Ausgleichsrechnung der Scannerdaten mit den Referenzdaten zu gross. Zudem ist bei Laserscannern der oben angeführte, klassische Parametersatz der Umschlagsmessung nicht mehr in dieser Form zutreffend und es fehlt auch die Visiereinrichtung zur sekundengenauen Anzielung.

Zwar kann auf den ersten Blick, der Laserstrahl stellvertretend für die Ziellinie angesehen werden, jedoch weist dieser ganz andere Eigenschaften hinsichtlich der richtungsbestimmenden Invarianten auf. Diese neuartige Abhängigkeit oder Parametrisierung der Ziellinie wird im Vermessungswesen bisher nicht in dieser Form berücksichtigt, bzw. war diese bisher entweder erst gar nicht bekannt oder zumindest deren Einfluss auf die Kalibrierung in dieser Form nicht bewusst.

Wie bereits erwähnt, ist auch eine entsprechende Robustheit der gesamten 3D-Scanner-Vorrichtung zur Sicherstellung der geforderten Winkelmessgenauigkeiten und zur Erzielung von hochgenauen und reproduzierbaren Messergebnissen erforderlich. Daher müssen die Komponenten zur Laserstrahlführung, insbesondere statische oder sich drehende Ablenkungseinheiten, eine hohe Steifigkeit aufweisen, um resistent gegenüber Umwelteinflüssen zu sein. Andrerseits müssen gattungsgemässe Scannervorrichtungen zusätzlich zur erwähnten, schnellen Entfernungsmessung auch den Messlaserstrahl mit entsprechend hoher Geschwindigkeit bewegen, um Objekte in kurzer Zeit zu scannen. Diese Scannbewegung kann beispielsweise mit rasch oszillierenden oder sich drehenden Spiegeln, beispielsweise mit einer hohen Drehgeschwindigkeit bzw. Frequenz von mehr als 200 Umdrehungen pro Sekunde, realisiert werden. Bereits bei mittleren Geschwindigkeiten, unterhalb der beispielhaft aufgeführten Ablenkfrequenz von 200 Hz, muss aus Gründen der Dynamik die Masse des bewegten Teils so klein wie möglich gehalten werden, was jedoch der Forderung nach hoher Steifigkeit entgegensteht.

Anwender von klassischen Vermessungsinstrumenten wie Theodoliten oder Tachymetern sind es gewohnt, jederzeit und ohne grossen Aufwand, die Genauigkeit ihres Messsystems überprüfen zu können, sei dies beispielsweise in einem Raum mit bekannten Referenzmarken oder im Feld durch Anmessung dafür geeigneter Ziele in zwei Lagen. Bei den bekannten Scannern fehlt diese Möglichkeit und dem Benutzer wird praktisch keine Möglichkeit geboten, die Messgenauigkeit des Geräts genau zu bestimmen oder zu verifizieren bzw. das Gerät zu kalibrieren.

Eine Aufgabe der vorliegenden Erfindung ist somit, ein zuverlässiges und präzises Gerät mit Scanfunktionalität, auch für den Feldeinsatz, bereitzustellen.

Eine Aufgabe besteht darin ein präzises Gerät mit Scanfunktionalität bereitzustellen, welches den Benutzer in die Lage versetzt, dessen Systemgenauigkeit und/oder Kalibrierung auf einfache, aber genaue Weise zu überprüfen bzw. zu korrigieren.

Eine weitere Aufgabe besteht darin, dem Benutzer einen Prüf- und Messablauf für ein Gerät mit Scanfunktionalität bereitzustellen, sodass der Benutzer im Feld eigenständig die Messgenauigkeit überprüfen und/oder gegebenenfalls die Kalibrierparameter in-situ neu bestimmen kann.

Eine Aufgabe ist dabei auch das Bereitstellen eines Verfahrens zur Genauigkeitsermittlung und/oder Kalibrierung eines Geräts mit Scanfunktionalität, insbesondere mit einem speziell auf derartige Scanner angepassten Geräte- bzw. Fehlermodell, wobei das Verfahren auch im speziellen für eine einfache Ausführung im Feld geeignet ist.

Eine weitere Aufgabe besteht darin, dass dieses Verfahren die Genauigkeitsermittlung und/oder Kalibrierung eines Geräts mit Scanfunktionalität in einer einzigen Geräteaufstellung ermittelbar macht.

Eine weitere Aufgabe ist dabei auch das Bereitstellen eines Verfahrens zur Genauigkeitsermittlung und/oder Kalibrierung eines Geräts mit Scanfunktionalität, welches auf unvermessene Zielobjekte, also Zielobjekte ohne anhand einer Totalstation oder anderen Vermessungsgeräten vermittelten Raumkoordinaten, im Feld geeignet ist.

Eine weitere Aufgabe besteht darin, das dieses Verfahren zumindest teilweise automatisiert ausführbar ist, insbesondere mit einer entsprechenden Bedienerführung zur automatischen oder semi-automatischen Ausführung eines Genauigkeitsprüf- und/oder Kalibriervorgangs.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Wie bereits dargelegt, ist der Benutzer bei klassischen Vermessungsinstrumenten wie Theodoliten in der Lage, durch einfache Messmethoden die Winkelmessgenauigkeit des Instruments zu überprüfen und falls notwendig zu kalibrieren. Aus Sicht eines Vermessers ist auch bei Scannern eine Möglichkeit zur Feldkalibrierung durch den Benutzer selbst zu schaffen, ähnlich jener, welche er von Theodoliten oder Totalstationen her kennt. Dabei ist für den Vermesser nicht eine theoretische Gerätegenauigkeit unter Laborbedingungen, sondern die aktuelle Systemgenauigkeit für die aktuellen Messungen in der aktuellen Stationierung von primärer Bedeutung.

Das im weiteren im Detail erläuterte, erfindungsgemässe Kalibrierverfahren betrifft ein Gerät mit Scanfunktionalität, insbesondere ein in Polarkoordinaten messendes Gerät, beispielsweise ein 3D-Scanner, mit einer elektrooptischen Entfernungsmesseinrichtung mit einer Laserachse als Zielachse, einer motorisierten, optischen Ablenkeinheit welche die Zielachse um einen variablen Ablenkwinkel gegenüber der Entfernungsmesseinrichtung ablenkt insbesondere wobei die Zielachse (3) durch einen gegenüber der Entfernungsmesseinrichtung beweglichen Spiegel abgelenkt wird, und wenigstens einer Winkelmesseinrichtung zur Bestimmung einer Winkelstellung der Ablenkeinheit.

Das Kalibrierverfahren beinhaltet die Schritte:

- erstes Vermessen von Winkel-Koordinaten einer Zielmarke in einer ersten Winkelstellung der Ablenkeinheit als erster Lage und

- zweites Vermessen von Winkel-Koordinaten der Zielmarke in einer zweiten Winkelstellung der Ablenkeinheit als zweiter Lage,

wobei sich die erste Lage und zweite Lage unterscheiden, insbesondere wobei die erste Lage zur zweiten Lage in zwei Achsen derart rotiert ist, sodass die Zielachse in beiden Lagen zumindest annähernd in dieselbe Raumrichtung zeigt.

Die zwei Achsen entsprechen dabei den Achsen der Ablenkeinheit, welche Fehlstellungen gegenüber einem theoretischen, der Vermessung zugrunde gelegten Achssystem aufweisen können. Beispielsweise ist eine der Achsen eine Stehachse, welche um etwa 200 gon rotiert wird und die andere Achse eine Kippachse, welche um 400 gon abzüglich deren Winkelstellung zur Stehachse in der ersten Lage rotiert ist.

Dabei wird das erste und zweite Vermessen der Zielmarke anhand von Bildern, welche mit einer Kamera mit einem Sichtfeld, deren optische Achse durch die Ablenkeinheit gegenüber der Kamera abgelenkt wird, durchgeführt und es erfolgt ein Bestimmen von Kalibrierparametern basierend auf den Winkelstellungen und den Winkel-Koordinaten in erster und zweiter Lage.

Dabei erfolgt das Vermessen anhand der Bilder mit einem Auflösen der Bildkoordinaten der Zielmarke mit einer hohen (Winkel-)Auflösung des Sichtfelds, insbesondere mit einer Auflösung der Bilder von weniger als 3 Winkelsekunden, vorzugsweise von weniger als 1 Winkelsekunden, welche durch Sub-Pixel-Interpolation der Kamera-Bilder erzielt werden kann.

Insbesondere wird dabei ein mathematisches Gerätemodell, welches den mechanischen Aufbau und die Strahlführung des Geräts mit Scanfunktionalität repräsentiert, zugrunde gelegt, speziell ein Gerätemodell, welches (im Gegensatz zum Theodolitenmodell) von der Elevation der Zielachse abhängige Kollimations- und/oder Indexfehler der Zielachse aufweist.

In weiterer Folge können anhand der Kalibrierung die Genauigkeit, Residuen und/oder statistische Kennwerte der Systemgenauigkeit ermittelt werden. Die Kalibrierung, in Form von Kalibrierparametern, kann zur Korrektur von nachfolgend ermittelten Messwerten, insbesondere Punktwolken, genutzt werden. Das Bestimmen von Kalibrierparametern kann basierend auf den Winkelstellungen von zumindest einer Achse, insbesondere aber beider Achsen und den Winkel-Koordinaten in erster und zweiter Lage erfolgen.

Als Basis für die weiteren Erläuterungen werden vorab, als Teilaspekt der vorliegenden Erfindung, ein mathematisches Gerätemodell sowie die kalibrierrelevanten Parameter eines laseroptischen Scanners identifiziert. Hierzu werden die im Folgenden erläuterten Aspekte einer beispielhaften Ausführungsform eines Scanners betrachtet werden. Die hierbei getroffenen grundsätzlichen Überlegungen zur Strahlführung lassen sich von einem Fachmann in analoger Weise auch auf alternative Ausführungsformen anwenden.

Wegen den erwähnten, hohen Umdrehungszahlen des Scannerdrehkopfs ist bei Scannern die Laserquelle zumeist in der Stütze angeordnet. Somit entfällt die im Theodolitenmodell enthaltene, direkte Kopplung der Zielachse zur Kippachse, da die Laserquelle nicht direkt mit der Kippachse mitbewegt wird. In Folge wird die Ziellinie bei einer Zwei-Lagenmessung nicht derart rotiert, wie dies beispielsweise bei einem Theodolit der Fall ist. Dadurch lassen sich auch gewisse Fehler mit einer klassischen Zwei-Lagenmessung wie diese bei Theodoliten durchgeführt wird, bei einem Scanner nicht entsprechend eindeutig identifizieren.

Ein möglicher Parametersatz von Kalibrierparametern eines Ausführungsbeispiels eines Scanners, insbesondere mit der oben beschriebenen Laseranordnung, ist beispielsweise folgender:

l ,q:     Indexfehler des 2-Achsen-Neigungssensors beziehungsweise der Stehachsen-Schiefe;

i:        Indexfehler (Winkel-Offset) des VertikalwinkelSensors;

rc, ri:   Winkelfehler der Laserquelle zur Rotations- bzw. Kippachse;

pci:      Winkelfehler des Drehspiegels zur Rotations- oder Kippachse;

k:        Schiefe der Rotations- oder Kippachse zur Stehachse.

Werden als weitere Parameter noch die Distanz und/oder die Neigungswinkel der Geräteaufstellung hinzugenommen, dann stellt sich das Problem einer System-Kalibrierung des gesamten Vermessungssystems. Bei dieser werden in einem Verfahren Achsen-, Aufstellungs- und Distanzmessgenauigkeit geprüft und gegebenenfalls, wenn diese nicht den Spezifikationen oder Anforderungen entsprechen, kalibriert.

Der Einfachheit halber werden im Folgenden primär die Winkelfehler der Achsen im Detail diskutiert. Es werden in den beispielhaften Ausführungen die Achsen-Abstände (Offsets) nicht explizit berücksichtigt, ohne jedoch den allgemeinen Fall auszugrenzen, bei welchem auch diese und weitere Kalibrierparametern erfindungsgemäss bestimmt werden. Beispielsweise lassen sich Achsen-Offsets anhand einer Winkelfehlerbestimmung in mehreren Distanzen ermitteln. Ein Fachmann im Bereich der Fehlerbestimmung bei Vermessungsgeräten ist in der Lage, auch die weiteren System-Kalibrierparameter des Gesamtsystems, entsprechend der vorliegenden Erfindung in analoger oder ähnlicher Weise zu bestimmen bzw. mit weiteren im Vermessungswesen bekannten und üblichen Methoden zu kombinieren.

Eine im Folgenden bei Objektaufnahmen erzeugte Punktwolke kann dann mit Gewissheit die spezifizierte bzw. erforderliche hohe Messgenauigkeit erreichen. Die Geräteaufstellung kann bei Kalibrierung und Messung unverändert bleiben.

Die Bedienung des Prüf- und/oder Kalibrierprozess kann durch ein lokales Userinterface direkt vor Ort auf dem Scanner bereitgestellt werden. Das Userinterface kann alternativ auch durch ein, mittels Kabel oder Funksignalen verbundenes, Remote-Bedieninterface oder mittels Software auf einem PC, Laptop, Tablet-PC, SmartPhone, etc. realisiert sein. Eine Teilaspekt der vorliegenden Erfindung ist insbesondere auch die Bereitstellung eines Kalibrierprogramms, welches den Benutzer mittels einer Bedienoberfläche anleitet, anhand von Scannerdaten von gescannten und identifizierbaren Objekten oder Zielmarken, vorzugsweise in zwei Lagen des Sensorkopfes, die systematischen Achsen- und Offsetfehler des Scanners zu ermitteln.

Das Fehlen einer Visiereinrichtung zur sekundengenauen Anzielung erschwert bei Scannern die Ausführung des von Theodoliten bekannten Kalibrierverfahrens. Vermessungsingenieuren ist aufgrund der Varianz-Kovarianz-Fehlerfortpflanzung der Verlust an Präzision der Kalibrierparameter durch ungenaue Beobachtungen und Anzielungen hinlänglich bekannt. Wie oben erläutert, wird bei Scannern mit modernen Entfernungsmessern aber insbesondere die Winkelmessung zur kritischen Komponente in Bezug auf die erreichbare Punktgenauigkeit. Die Winkelmessgenauigkeit auf Zielmarken bei Scannern ist meist nicht genauer als 10 arcsec, wodurch eine Kalibrierung, welche mittels derartigen Beobachtungen erzeugt wird, nicht die im Vermessungswesen geforderte Präzision erreichen kann. Es mangelt sowohl an dafür geeigneten und empfohlenen Zielmarken (Rautenmuster, Kugeln, Pyramiden, ...) als auch an entsprechenden Applikationsprogrammen und Bedieneroberflächen, um eine Fehlerbestimmung und Fehlerzuordnung bei Scannern mit der nötigen Präzision ausführen zu können.

Eine hohe Winkel-Präzision von polaren Messungen zu Zielmarken oder Zielobjekten kann jedoch durch eine Anmessung mittels Kamera erreicht werden. Moderne Scanner sind oftmals mit einer integrierten Kamera ausgerüstet, mit welcher zu den Punktwolken der vermessenen Raumpunkte auch zugehörige Bildinformationen aufgenommen werden können. Bekannt sind vor allem Panoramabilder - auch Full-Dome-Aufnahmen genannt. Die Kamera weist dabei meist einen Flächen-Bildsensor und zumindest ein Objektiv mit Fokus-und/oder Zoomfunktion auf.

Die vorliegende Erfindung nutzt eine derartige, im Scanner integrierte Kamera, welche in einer zum Achsensystem fixen und genau definierten Lage montiert ist. Beispielsweise ist die Kamera in der Fortsetzung der Kippachse in der Stütze eingebaut. Der Laser des Entfernungsmessers kann auf derselben Seite, aber auch auf der gegenüberliegenden Seite der Kippachse platziert sein. Vorzugsweise ist die Kamera so angeordnet, dass sich die Scanner- oder Laserzielachse in deren Sichtfeld (oder Gesichtsfeld), als ein von der Kamera erfassbarer Winkelbereich, befindet. Derart angeordnete Kameras werden auch als Boresight-Kameras bezeichnet. Bei einem fehlerfreien Achsensystem würde die ideale Scanner-Zielachse in der Normalenebene zur Kippachse liegen und zusammen mit der Stehachse würden sich die drei Achsen in einem Punkt schneiden, welcher Schnittpunkt meist auch dem Ursprung der gemessenen Polarkoordinaten entspricht. Das erfindungsgemässe Prinzip ist alternativ auch mit einer Kamera, welche eine Parallaxe zur Scanner-zielachse aufweist möglich, jedoch werden im folgenden der Einfachheit halber und ohne einschränkende Wirkung die Erläuterungen auf eine Boresight-Kamera bezogen.

Bei den Ausführungsformen von integrierten Kameras sind insbesondere zwei Aspekte zu beachten. Zum einen hat für eine entsprechend genaue Kalibrierung die erzielbare Winkel-Auflösung und somit auch Winkel-Messgenauigkeit der Kamera im Winkel-Sekundenbereich zu liegen. Jedenfalls müssen mit der Kamera Winkel aufgelöst werden können, welche kleiner sind als jene Winkelgenauigkeit welche durch die Kalibrierung zu erzielen ist. Zum anderen darf das Gesichtsfeld der Kamera nicht zu klein ausfallen. Typische Gesichtsfelder betragen zumindest etwa 15 Grad oder mehr. Vor dem eigentlichen Prüfbeginn soll der 3D-Scanner möglichst gut horizontiert sein, wodurch auch eine Überprüfung des Neigungssensors durchgeführt werden kann, beispielsweise indem dieser ebenfalls um die Stehachse rotiert und in zumindest zwei bekannten Winkellagen die Neigung bestimmt wird. In jedem Fall ist darauf zu achten, dass der Scanner während des Kalibrierens und Messens fest steht, nicht einsinken kann und möglichst vor direktem Sonnenschein geschützt ist.

Neben der bereits erläuterten, stabilen Aufstellung des Scanners als Vermessungsinstrument ist ein ebenso fest stehendes Zielobjekt erforderlich. Beispielsweise wird eine A4 grosse Zieltafel, beispielsweise in einer Entfernung von 15m bis 30m, möglichst senkrecht zur Zielachse oder Laserachse in einer, insbesondere relativ zum Scanner, fixierten Position angebracht. Die Fixierung der Zieltafel als Zielmarke sollte dabei eine Genauigkeit der Lage- oder Mittelpunktbestimmung von 0.2 mm oder besser gewährleisten. Während des Kalibriervorgangs darf sich die Aufstellung des Instruments und der Zieltafel nicht verändern.

Die Zieltafel ist dabei derart ausgebildet, dass eine Positionsbestimmung eines optischen Merkmals durch die Kamera, beispielsweise eine Mittelpunktbestimmung der Zieltafel, mit einer Präzision von typisch 1 bis 5 Winkelsekunden möglich ist. Die Definition der Zieltafel kann beispielsweise als pdf-Datei vorliegen. Deren physikalische Realisierung kann dann mit einem handelsüblichen Drucker erzeugt werden. Alternativ sind auch andere Zielobjekte mit 2- oder 3-dimensionalen Formen und hohen Helligkeitskontrasten anwendbar. In jedem Fall braucht der Scanner mit Kamera einwandfreie Sicht zur Zieltafel als Zielobjekt.

Im Folgenden wird ein beispielhafter Prüf- und Kalibrierprozess dargestellt, welcher eine ausreichend exakte Winkelbestimmung garantiert, um die Systemgenauigkeit zu verifizieren. Dieser Ablauf kann auch von einem Benutzer im Feld durchgeführt werden. Der Scanner bietet dazu die Möglichkeit, einen Messvorgang in jeweils zwei Anziellagen durchführen zu können, wie dies von der zuvor beschriebenen Zwei-Lagenmethode bekannt ist.

Der Prüfvorgang mit einem erfindungsgemässen Scanner mit Kamera kann dabei die folgenden, beispielhaft im Detail erläuterten, Schritte umfassen. Die konkrete Kombination, Reihfolge und praktische Ausgestaltung der Schritte kann von den zu bestimmenden Parametern, der örtlichen Situation sowie den geforderten Genauigkeiten abhängt. Vorzugsweise soll der Prüf- und Kalibrierprozess mit einer einzigen Scanneraufstellung erreicht werden.

In einem ersten Schritt ist eine Aufstellung des Scanners zu wählen. Eine fixierte Aufstellung über festem Untergrund ist dabei wesentlich. Das Aufstellen des Scanners kann hierbei in einem im empfohlenen Abstand zu den vorgesehenen Zielmarken oder Zielobjekten geschehen, falls letztere vorab schon bekannt sind. Alternativ kann auch die Scannerposition frei gewählt werden und anschliessend, wie unter Schritt 2 beschrieben, können die Zieltafeln entsprechend positioniert werden. Durch ein Aufstellen in jener Position, von welcher aus auch eine nachfolgende Messung durchgeführt werden wird, können allfällige Verstellungen durch einen Stationierungswechsel des Scanners zwischen Kalibrierung und Messung vermieden werden.

In einem zweiten Schritt legt der Benutzer die zu überprüfenden Kalibrierparameter fest, beispielsweise alle oder eine selektive Auswahl von Parametern. Zudem kann er eine zu erreichende Genauigkeitsvorgabe entweder für das Gesamtsystem oder für jeden Parameter separat definieren.

Der erfindungsgemässe Scanner errechnet und zeigt einen Vorschlag für die Elevation des "Scanfelds" mit der Ausdehnung des Elevationssektor über oder unter dem Horizont, in welchem die Zielobjekte, Zieltafeln oder Zielzeichen vorteilhaft anzubringen sind. Des Weiteren errechnet das Instrument, genauer gesagt ein darin oder in einem Bediengerät verbauter Digitalrechner mit entsprechender Software einen empfohlenen, optimalen Abstand oder Abstandsbereich zu den Zielobjekten. Typische Prüfdistanzen sind beispielsweise 10m bis 50m zwischen Zieltafeln und Scanner. Beispielsweise kann es vorteilhaft sein, zumindest eine Zieltafel möglichst nahe am Horizont bei 100 gon und möglichst senkrecht zur Zielachse zu positionieren, wie dies auch bei Theodoliten-Prüfverfahren zur Bestimmung des Zielachsenfehlers praktiziert wird.

Wenn beispielsweise zumindest einige der Kalibrierziele vorgegeben sind, die möglichen Zieltafelpositionen umgebungsbedingt eingeschränkt sind oder der erfahrene Vermesser vorteilhafte Zielpositionen bereits abschätzen kann, ist es auch möglich dem Gerät bekannte Zielpositionen zumindest grob bekannt zu geben, bzw. den Scanner die Zieltafeln in einem automatischen Suchlauf selbsttätig erkennen zu lassen. Auch bei den Zieltafeln ist auf eine fixierte, feste Aufstellung während des Kalibriervorgangs zu achten.

Zur Prüfung der Anzahl n von zuvor selektierten, zu überprüfenden Parametern sind im allgemeinen (ohne Berücksichtigung von Bedingungsgleichungen) zumindest n gemessene Koordinaten von gut konfigurierten Zielmarken aufzunehmen. Gut konfiguriert oder vorteilhaft aufgestellt bedeutet dabei speziell, dass die Zieltafeln zumindest annähernd an den vom Gerät vorgeschlagenen oder äquivalenten Positionen angebracht sind, sowie dass eine Beobachtung der Zieltafeln in zwei Lagen durchgeführt werden kann.

Der Benutzer kann auch vom Bedieninterface aufgefordert werden, beispielsweise 1 bis 10 Zielmarken im entsprechenden Elevationssektor zu platzieren oder entsprechend geeignete, natürliche Zielmarken in diesen Bereichen festzulegen. Auch ein allfälliges, zur Optimierung der Bestimmbarkeit der Kalibrierparameter empfohlenes Nachjustieren von Zieltafelpositionen kann dem Benutzer empfohlen werden.

Falls der Scanner über einen sichtbaren Markierlaser verfügt, kann der Scanner mit diesem beispielsweise eine vorgeschlagene Zieltafelposition oder einen entsprechenden Positionsbereich markieren und das erreichen eines empfohlene Distanzbereichs, beispielsweise mittels des Entfernungsmessers überwachen und optisch, akustisch oder über ein Remote-Bedieninterface dem Benutzer signalisieren.

Ein Auswahlkriterium der vorgeschlagenen Zielposition kann beispielsweise sein, dass dabei einige der Zielpunkte möglichst unter verschiedenen Visurwinkeln, etwa mit Vertikalwinkeln am oberen und am unteren Rand des Elevationssektors sowie auch nahe beim Horizont (100gon), zur Anmessung platziert werden. Hinter der Benutzerführung steckt im speziellen ein Software-Programm, welches anhand einer Sensitivitätsanalyse des funktionalen Modells des Laserscanners entwickelt wurde.

Mit einem optimalen Kalibrierfeld aus gut konfigurierten Zieltafeln oder natürlichen Zielen, kann die geforderte Genauigkeit bei der Bestimmung der Kalibrierparameter gewährleistet werden. Das Verfahren lässt sich jedoch auch bei umgebungsbedingt erforderlichen Abweichungen von den vorgeschlagenen Zielmarkenpositionen durchführen, jedoch gegebenenfalls mit einer gegenüber einer optimalen Anordnung reduzierten Genauigkeit oder Zuverlässigkeit des Kalibriervorgangs, worauf die Benutzerführung des Bedieninterface auch entsprechend hinweisen kann.

Daraufhin erfolgt ein händisches, halbautomatisches oder vollautomatisches Einmessen der Richtungen zu den Zielpunkten, wobei das Scanner-Gerät die Ziele erkennt und/oder identifiziert und diese anschliessend zur genauen Vermessung gezielt automatisch anzielen kann. Der Scanner kann dabei auch prüfen, ob sich die Zielobjekte im erforderlichen Distanzbereich und dem empfohlenen Elevationssektor befinden. Gleichzeitig kann auch die Ausrichtung der Zieltafel zur Zielachse grob geprüft werden. Bei vollautomatischem Betrieb unterstützt die Kamera die Zielpunktsuche. Die Kamera ermittelt auch den jeweiligen Helligkeitskontrast der Zielmarke und prüft, ob dieser für eine präzise Winkelbestimmung ausreichend ist.

Daraufhin kann eine optionale Kalibrierung der Kamera zum aktuellen Achsensystem erfolgen, wobei dieser Schritt nicht bei jeder Ausführung der Methode, sondern beispielsweise nur im Rahmen einer Werkskalibrierung oder in grösseren Prüfintervallen durchgeführt werden kann. Bei einer Vielzahl von gattungsgemässen Scannern kann von einer hohen Stabilität der Abbildungsoptik und der Anordnung von Kamera zur Steh- und Kippachse ausgegangen werden. Dieser optionale Schritt zur Kamerakalibrierung ist auch ausführbar, wenn die Schiefe der Kippachse zur Stehachse noch unbestimmt ist.

Eine optionale Bestimmung des Kameranullpunkts kann beispielsweise mit einer Zenitzielung erfolgen. Eine derartige Zenitzielung kann dabei wie folgt ablaufen:

- Eine oder mehrere aneinander gereihte Zieltafeln im Zenit anbringen (z.B. an die Decke montieren).
- Bei V=0gon in Lage 1 und 2 mit der Kamera die Zieltafel erfassen.
- Die Zielachse in V-Richtung bewegen bis Zieltafel am Rande des Gesichtsfeldes der Kamera liegt.
- Bei dieser Elevationsrichtung den V-Winkel mittels des Winkelgebers bestimmen und mit der Kamera die Zieltafel in Lage 1 und Lage 2 erfassen.
- Die Zielachse in eine weitere V-Richtung bewegen und bei dieser dritten Elevationsrichtung erneut den V-Winkel mittels des Winkelgebers bestimmen und mit der Kamera die Zieltafel in Lage 1 und Lage 2 erfassen.

Aus den dabei ermittelten Messdaten und Kamerabildern lassen sich alle relevanten Kalibrierparameter inklusive dem Kameranullpunkt bestimmen. Dabei kann der Kameranullpunkt in jener Richtung mit Richtungsparameter (rc,ri) =(0,0) festgelegt werden, wodurch eine Prüfung und/oder Neukalibrierung der Laserzielachse vereinfacht wird. Falls der Kameranullpunkt in dieser Art bekannt ist, so kann mit einer weiteren Messung direkt die Laserstrahlrichtung mit den Parametern (rc,ri) im Koordinatensystem der Kamera bestimmt werden. Die optionale Prüfung und Kalibrierung von weiteren internen Kamera-Parametern wie Brennweite u.s.w. erfolgt mittels eines matrix-artigen Abtastens über eine in etwa senkrecht zur Zielachse platzierte Zieltafel, vorzugsweise bei ca. V = 100 gon.

In einem ersten Teilschritt bestimmt das Gerät aus der geforderten Genauigkeitsvorgabe und dem Kontrast der Abbildung der Zieltafel, eine erforderliche Messpunktdichte des darauf folgenden Matrix-Scans. Die Zielachse und das Blickfeld der Kamera des Scanners bewegt sich anschliessend rasterförmig über die Zieltafel und die Kamera nimmt dabei jeweils Bilder der Zieltafel auf, wobei die Winkelsensoren der Ablenkeinheit die zu den Bildern zugeordneten Winkelstellungen der Achsen erfasst, beispielsweise mit Hz als Horizontalwinkel der Stehachse und V als Vertikalwinkel der Kippachse. Somit liegt ein Satz von, im 2D-Raster des Matrix-Scans aufgenommenen und entsprechend dem Matrix-Raster verschobenen, Bildern der Zieltafel mit den zugehörigen Achspositionen vor. Mittels Bildverarbeitungssoftware werden die Positionen eines visuellen Merkmals der Zieltafel, beispielsweise deren Mittelpunkt, in Kamera-Koordinaten, also in der Bildebene, berechnet. Daraus lassen sich die Kalibrierparameter wie Verdrehung der Kamera zum Achsensystem und/oder Skalierung der Kamera-Pixel zu den Winkelsensoren bestimmen. Abweichungen von der Orthogonalität der so bestimmten Transformationsmatrix zwischen Pixelkoordinaten und Achsensystem geben einen ersten Hinweis auf allfällige Winkelfehler der Kippachse.

Bei einer weiteren Messung kann die Laserstrahlrichtung zum Koordinatensystem der Kamera bestimmt werden. Dieser Vorgang ist stark von der konkreten Ausführungsform des scannerinternen Aufbaus abhängig. Im einfachsten Fall wird der Laserspot auf dieselbe Zieltafel projiziert, dessen Position von der Kamera erfasst und im Bild der Kamera vermessen. Damit ist die Laserzielrichtung im Kamerakoordinatensystem bestimmt.

Im nächsten Schritt startet das Scannerinstrument die eigentliche Datenauswertung zur Ermittlung der Instrumentengenauigkeit. Mit der Kamera werden die zuvor aufgestellten Ziele in zwei Lagen durch die Kamera fotographisch in entsprechenden zwei Bildern aufgenommen. Anschliessend wird eine Ähnlichkeitstransformation, insbesondere in Form einer Bild-Rotation und -Translation, zwischen den in den beiden Lagen jeweils aufgezeichneten Bildern durchgeführt. Bei bekannten Zielobjektmustern kann dies beispielsweise mit einem so genannten Template-Matching erfolgen. Mit Hilfe eines dem Scanner angepassten, geometrischen Achsenmodells lassen sich nunmehr die Achsenfehler des Scanners aus den Daten der Ähnlichkeitstransformationen der unter den verschiedenen Visurwinkeln von den jeweiligen Zieltafeln aufgenommen Bildern berechnen. Wie bereits zuvor erläutert, erlaubt das Kamerabild zusammen mit den Winkelsensoren dies mit einer Winkelauflösung im Winkelsekundenbereich durchzuführen.

Alternativ können die mittels der Kamera ermittelten Zielrichtungen und Verdrehungen auch mittels einer Regressionsanalyse ausgewertet werden. Die Beobachtungen einer Zieltafel in Lage 1 und Lage 2 werden mit dem Modell des lokalen Scannerkoordinatensystems in Bezug gesetzt. Mittels Ausgleichsrechnung, zum Beispiel nach dem Gauss-Markov oder allgemeiner nach dem Gauss-Helmert-Modell, werden daraus Schätzwerte für die zu bestimmenden Achsenparameter ermittelt. Gleichzeitig liegen dabei Verbesserungen oder Residuen als Ergebnis vor. Die Residuen geben Auskunft über die Punktmessgenauigkeit an den Zieltafeln und damit über die aktuell erreichte Winkelmessgenauigkeit des Scannerinstruments.

Eine Kovarianzmatrix der geschätzten Parameter abgeleitet aus der sogenannten Kofaktorenmatrix des Kalibriermodells kann als Mass für die zu prüfende statistische Messgenauigkeit des Instruments genutzt werden. Die Differenzen von neuen zu alten Parametern geben Auskunft über systematische Messabweichungen und die allgemeine Scanner-Systemstabilität.

Beispielsweise zeigt das Scannerinstrument auf einem Display der Bedieneinheit die alten und die neu ermittelten Werte der selektierten Kalibrierparameter an. Zur Prüfung der Plausibilität können zusätzlich auch die Konfidenzintervalle für die alten und die neuen Parametern angezeigt oder geräteintern validiert werden.

Sind die Residuen oder die neu geschätzten Parameter im verlangten oder spezifizierten Genauigkeitsintervall, dann kann der Benutzer die neuen Kalibrier-Parameter speichern und den Prüfvorgang abschliessen. Die neuen Kalibrier-Parameter können dann bei der Bestimmung der Messwerte berücksichtigt werden. Stellt sich hingegen die Winkelmessgenauigkeit nach den obigen Schritten als unzureichend heraus, so kann der Benutzer wie folgt fortfahren.

Sollte aus irgendwelchen Gründen die geforderte und vorgegebene Genauigkeit nicht erreicht worden sein, so wird dies dem Benutzer mitgeteilt.

Ein Grund könnte eine ungünstige Anordnung der ScannerAufstellung zu den Zielobjekten sein. In diesem Fall kann das Instrument dem Benutzer einen Vorschlag machen, wie die Zieltafeln für die Kalibrierung vorteilhafter zu platzieren sind und anschliessend den Prüf- und Kalibrierablauf wiederholen.

Ein anderer Grund für ungenügende Genauigkeit könnte mit ungünstigen Lichtverhältnissen zusammenhängen, was eventuell durch einen Standortwechsel des Scanners und/oder der Zieltafeln behoben werden kann. Alternativ kann auch eine künstliche Beleuchtung der Zieltafeln Abhilfe schaffen. Um von ungünstigen Lichtverhältnissen unabhängig zu sein, kann das erfindungsgemässe Gerät beispielsweise auch mit einem Zielbeleuchter ausgestattet sein. Solche Zielbeleuchter sind beispielsweise von Totalstationen mit automatischer, kameraunterstützter Zielanmessung bekannt. Ein derartig ausgerüsteter Scanner kann unabhängig von der äusseren Beleuchtungssituation die erforderlichen Messungen durchführen.

Ist der Scanner einmal kalibriert, so ist die Auswerteeinheit in der Lage, die Einflüsse der Achsenfehler zu korrigieren und somit präzise und hochgenaue Punktwolken der gescannten Objekte zu erzeugen. Die Systemgenauigkeit oder Messgenauigkeit des Scanner-Gerätes kann dadurch erheblich gesteigert werden.

Im Allgemeinen ist es empfehlenswert, vor jeder Präzisionsmessung, insbesondere nach einer Neuaufstellung des Scanners, die genauigkeitsrelevanten Kalibrierparameter zu prüfen und gegebenenfalls neu zu bestimmen.

Es ist im speziellen empfehlenswert, die Bestimmung der Instrumentenfehler in folgenden Situationen durchzuführen:

- vor Präzisionsmessungen, welche hohe Genauigkeiten und Zuverlässigkeit erfordern;

- nach längeren Transporten, bei welchen das Gerät potentiellen Schock-, Schlag oder Vibrationsbeanspruchungen ausgesetzt war;

- nach Temperaturänderungen, insbesondere grösser als 20°C;

- nach längerer Lagerungszeit des Geräts.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:

| | |
|---|---|
| Fig. 1 | die Darstellung eines beispielhaften geodätischen Arbeitsablaufes bei der Benutzung eines erfindungsgemäßen, Geräts mit Scanfunktionalität; |
| Fig. 2a und 2b | die Illustration des Prinzips der 2-Lagen-messung mit einem erfindungsgemäßen präzisen Gerät mit Scanfunktionalität; |
| Fig. 3 | die Darstellung eines ersten Ausführungsbeispiels eines erfindungsgemäßen Geräts mit Scan-funktionalität mit seitlich in der Stütze untergebrachter Boresight-Kamera; |
| Fig. 4 | die Darstellung eines zweiten Ausführungs-beispiels eines erfindungsgemäßen Geräts mit Scanfunktionalität mit einer parallel zum Laser eingespiegelten Boresight-Kamera; |
| Fig. 5a | die Darstellung eines Ausführungsbeispiels einer Zieltafel für das erfindungsgemäße Prüf- bzw. Kalibrierverfahren; |
| Fig. 5b | die Darstellung einer beispielhaften Vermessung eines optischen Merkmals mittels einer |

Kamera;

| Fig. 6 | die Darstellung eines dritten Ausführungs-beispiels eines erfindungsgemäßen Geräts mit Scanfunktionalität mit 2-dimensionalem Neigungs-sensor; |
| --- | --- |
| Fig. 7 | die Darstellung eines vierten Ausführungs-beispiels der erfindungsgemäßen präzisen Geräts mit Scanfunktionalität mit einem beispielhaften Zielachsenfehler; |
| Fig. 8 | die Darstellung eines fünften Ausführungs-beispiels eines erfindungsgemäßen, präzisen Geräts mit Scanfunktionalität mit einem beispielhaften Kollimations- und Kippachsen-schiefen-Fehlers; |
| Fig. 9 | die Darstellung einer Ausführungsform eines erfindungsgemäßen Geräts mit Scanfunktionalität mit einem aufsetzbareren Kollimator zur Laser-strahldetektion. |
| Fig. 10a, 10b, 10c und 10d | die Darstellung beispiel-hafter Beobachtungen mit einer Boresight-Kamera in zwei Lagen in einem erfindungsgemäßen Gerät mit Scanfunktionalität. |
| Fig. 11 | ein Flussdiagramm des Ablaufs eines beispielhaften Prüf- und Kalibrierprozesses; |
| Fig. 12 | eine weitere beispielhafte Ausführungsform eines erfindungsgemäßen Kalibrierziels. |

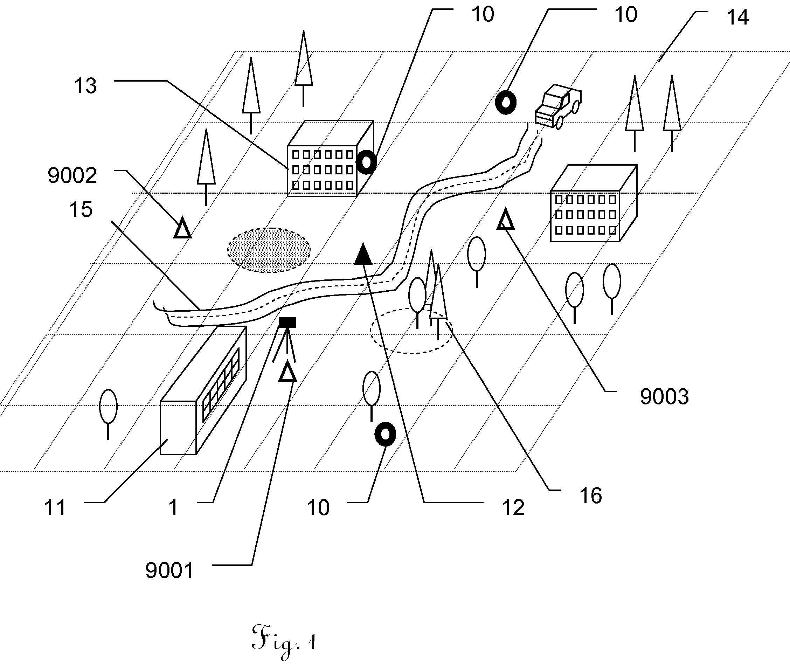

Anhand von Fig. 1 wird im Folgenden beispielhaft ein möglicher geodätischer Arbeitsablauf (Workflow) erläutert. Bei klassischen Vermessungsaufgaben wird das Messinstrument wie Theodolit oder Totalstation über einem bekannten Grundpunkt 9001, 9002, 9003 platziert.

Portable Instrumente sind, insbesondere beim Aufstellen, oft hohen, schockartigen Beschleunigungen ausgesetzt, beispielsweise beim Einrasten des Gerätes in einen Adapter. Auch bei einem Einfahren in einen Zentrierfuss können sich richtungsrelevante Elemente in den Winkelsensoren, Halterungen oder Zielachsenführungen, wie Laserspiegel, minimal verstellen. Dadurch sind gegebenenfalls die gespeicherten Kalibrierwerte oder Kalibriermodelle nicht mehr vollumfänglich gültig und folglich ist auch die Messgenauigkeit, insbesondere der Winkelmessungen von Azimut und Elevation, nicht mehr in den spezifizierten Bereichen. Der Scanner braucht in diesem Fall eine - zumindest partielle - Rekalibrierung oder gar eine vollständige Neukalibrierung um die geforderte oder spezifizierte Messgenauigkeit erreichen zu können.

Die geodätische Stationierung des Geräts umfasst unter anderem eine Vertikalstellung des Instruments, eine Eingabe der Instrumentenhöhe, eine Orientierung nach Norden und eine Versicherung der Aufstellung mit wenigstens einem Backsight-Punkt 12. Der Backsight-Punkt 12 kann beispielsweise eine Zielmarke mit bekannter Höhe über dem zugewiesenen Grundpunkt sein. Scanner 1 für den Einsatz im Vermessungswesen sind - vergleichbar zu Theodoliten-ebenfalls mit einem Zentrieradapter zur Aufstellung über einem Bezugspunkt, mit einer Höhen-Referenzierung der Kippachse (Rotationsachse des Spiegels) des Scanners, mit Neigungssensor und entsprechender Benutzer-Software zur Bedienung dieser und weiterer Funktionen ausgestattet, um die Messabläufe möglichst den bekannten Arbeitsvorgängen der klassischen Vermessung mit Theodolit oder Totalstation anzupassen.

Nach abgeschlossener Stationierung ist das Messinstrument 1 zu einem örtlichen oder übergeordneten Koordinatensystem 14 referenziert. Mittels des Backsight-Targets 12 ist der Scanner 1 zusätzlich im Koordinatensystem 14 versichert. Ist der Scanner 1 über dem Punkt 9001 positioniert, so kann er beispielsweise auch weitere Punkte 9002, 9003 anmessen, um bei einer folgenden Aufstellungen an jenen weiteren Punkten die Daten der dadurch erhaltenen Mehrfach-Scanns miteinander zu verknüpfen. Optional können auch vorhandene Referenz-Targets 10 im erfassbaren Blickfeld des Messgeräts (field of view) gemessen werden, mit welchen die Messungen zu einem örtlichen oder übergeordneten Netzwerk oder Koordinatensystem referenziert werden kann. Als Beispiele für die zu vermessenden Objekte sind die Gebäude 11 und 13, die Strasse 15 oder das Terrain 16 mit der Baumgruppe gezeigt.

Erfindungsgemässe Geräte mit Scanfunktion und die beschriebenen Methoden lassen sich jedoch auch im inneren von Gebäuden, Bergwerken, etc. in analoger Weise anwenden.

Die Messgenauigkeit des Systems ist dabei ein entscheidender Faktor, sowohl bei der Vermessung der einzelnen Aufstellpunkte als auch der Objekt-Scandaten selbst. Eine hohe Messgenauigkeit kann in der Regel nur garantiert werden, wenn diese vor Ort überprüft bzw. neu bestimmt und gegebenenfalls auch korrigiert oder kalibriert werden kann. Eine erfindungsgemässe Genauigkeitsüberprüfung und/oder Kalibrierung wird daher möglichst direkt im Anschluss an die Stationierung, vor der Versicherung im Koordinatensystem oder sonstigen Messungen durchgeführt.

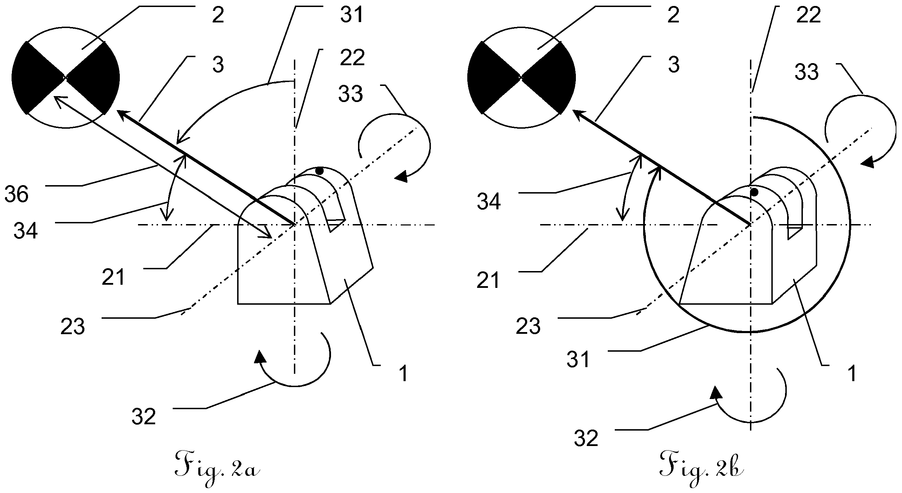

In Fig. 2a und 2b wird beispielhaft eine Aufstellung eines Scanners 1 zu einer Zieltafel 2 für den erfindungsgemässen Kalibriervorgang gezeigt, welcher vorzugsweise in zwei Lagen durchgeführt wird. In Fig. 2a und Fig. 2b ist eine Scanner-Messung eines Targets 2 in jeweils erster bzw. zweiter Lage dargestellt. Der Scanner 1 verfügt dabei über zwei Rotationsachsen, die Achse 22 mit dem zugeordenten Azimutwinkelsensor, welche als Stehachse bezeichnet wird, und die Achse 23 mit dem zugeordenten Elevations- oder Vertikalwinkelsensor, welche als Kippachse bezeichnet wird. Die Linie 21 symbolisiert die Normale zu den Achsen 22 und 23. Bei einer idealen und fehlerfreien Aufstellung und Kalibration entspricht der Vertikalwinkel der Achse 22 0 gon und derjenige der Achsennormalen 21 100 gon. Im fehlerfreien Fall und genauer Nivellierung liegt die Achse 23 in der Horizontalebene. Der Pfeil 3 stellt die Zielachse 3 und zugleich die Messrichtung des Entfernungsmessers des Instruments 1 dar, welcher auf das beispielhafte Ziel 2 gerichtet ist. Der Winkel 34 ist der Visur-oder Elevationswinkel und der komplementäre Winkel 31 wird als Vertikalwinkel bezeichnet.

Bild 2b zeigt im Vergleich zu Bild 2a das Instrument in der umgeschlagenen Stellung der Zwei-Lagenmessung, bei welcher die Stehachse 22 (durch den Pfeil 32 symbolisiert) um circa 200 gon und die Rotationsachse 23 (durch den Pfeil 33 symbolisiert) um (400gon-VI) verdreht sind, wobei VI den Vertikalwinkel in erster Lage bezeichnet. Im fehlerfreien oder ausreichend kalibrierten Fall wird dadurch derselbe Zielpunkt angemessen beziehungsweise sind allfällige Fehler anhand der auftretenden Richtungsabweichungen bestimmbar.

Die bestimmbaren Fehlerarten hängen dabei auch von der Positionierung der Ziele 2 in Bezug auf das Koordinatensystem des Scanners 1 ab. Abhängig von den vom Benutzer vorgegebenen Genauigkeitsanforderungen, kann das Instrument 1, wie zuvor erläutert, Hinweise auf die Anzahl der zu platzierenden Zieltafeln 2 geben und auch vorschlagen, in welchen Distanzen 36 und Elevationswinkeln 34 diese angebracht werden sollen.

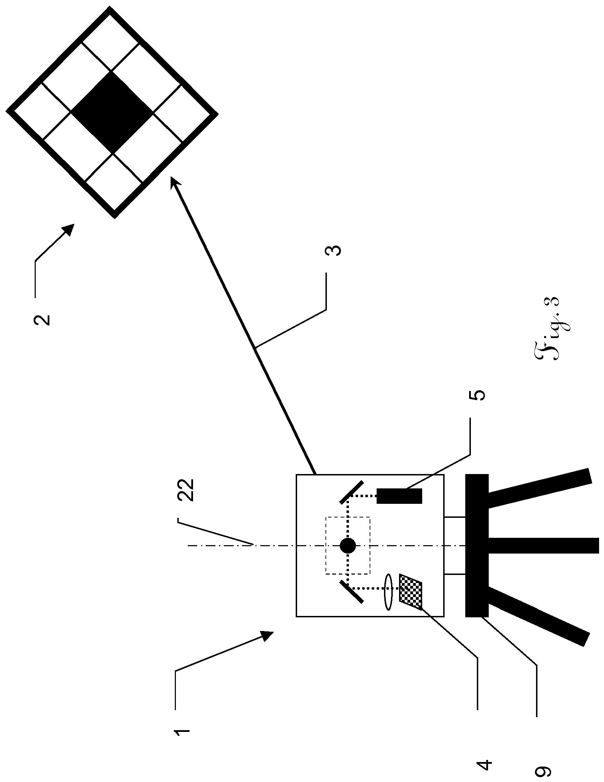

Fig. 3 zeigt schematisch ein Beispiel eines erfindungsgemässen Scanner 1 mit einer Boresight-Kamera 4, welche in dieser Ausführungsform seitlich in der Stütze untergebracht ist. Dabei wird nur ein einzelner, letzter Spiegel im Strahlengang um eine schnelle Achse bewegt (meist - jedoch nicht zwingend - die Kippachse). Die weiteren Teile des Scanners sind in einem statischen Teil oder in einem Teil, welcher mit verhältnismässig langsamerer Geschwindigkeit in einer zweiten, langsamen Achse 22 bewegt bzw. rotiert wird, untergebracht. Meist - jedoch nicht zwingend - handelt es sich hierbei um die vertikale Achse welche auch als Stehachse bezeichnet wird. Bei solchen Vorrichtungen wird die Kamera 4 selber nicht um die, in der Regel sehr schnell rotierende, innere Achse (Kippachse) gedreht. Auch der gesamte Entfernungsmesser oder zumindest die Laserquelle 5 der Entfernungsmesseinheit ist zumeist ausserhalb der schnellen, inneren Achse angeordnet.

Ein Scanner, als ein in Polarkoordinaten messendes Gerät, ist insbesondere durch die Spiegelablenkung nicht mehr derart konstruiert, dass sich systematische Fehler, wie beispielsweise Ziel- und Kippachsfehler, mittels einer klassischen Zweilagenmessung und Mittelung bestimmen lassen, wie dies etwa bei Tachymetern der Fall ist. Bedingt durch den andersartigen Geräteaufbau, insbesondere der Strahlführung der Messstrahlung, ist bei einer Kalibrierung darauf bedacht zu nehmen.

In Bezug auf das Kalibrierungsmodell führt dies dazu, dass Kollimationsfehler und Indexfehler nicht mehr als eine Invariante/Konstante auftreten, wie dies beim klassischen Theodolit der Fall ist. Dort wird beim Wechsel von Lage 1 zur Lage 2 das Fernrohr zusammen mit den Visurlinie und Laserdistanzmesser - also das gesamte Fernrohr - um 200gon um die Zielachse rotiert wobei Kollimations- und Indexfehler als konstante Winkeloffsets zur Normalen 21 auftreten. Beim Scanner hingegen versagt das klassische Kalibrierungsmodell der Zwei-Lagenmessung. Das mathematische Modell eines Scanners unterscheidet sich von jenem des tachymetrischen Messprinzips. Auch der Laser 5 bzw. der elektrooptische Distanzmesser 5 welchem der Laser zuzuordnen ist, befindet sich im gezeigten Beispiel ausserhalb der Kippachse, das heisst direkt an der Stütze. Wie schemenhaft angedeutet kann die Kamera 4 mit einem Flächen-Bildsensor (beispielsweise einem CCD- oder CMOS-Chip) und einer, durch eine Linse symbolisierten, Optik realisiert werden.

Beispielhafte, handelsübliche CCD- oder CMOS-Sensoren haben eine Grösse von 1/1.8 Zoll, 1/1.5 Zoll oder 1 Zoll mit einer Pixelzahl von 6 bis 12 Megapixel, wodurch die Pixelgrösse typisch bei etwa 2.5 um liegt. In einem praktischen Beispiel einer derartigen integrierten Kamera kann beispielsweise ein 2/3 Zoll CMOS-Sensor mit 8 Megapixel Auflösung Verwendung finden. Das Seitenverhältnis der aktiven Fläche des CMOS-Sensors beträgt üblicherweise 4:3 womit die Pixelzahl daher 3264 Pixel x 2448 Pixel beträgt. Ein solcher Sensor würde kombiniert mit einem Objektiv mit entsprechender Brennweite sowohl den oben erwähnten Sichtfeldanforderungen genügen, als auch die notwendige Winkelmessgenauigkeit von ca. 1 arcsec ermöglichen. Typischerweise sind Pixelinterpolationen von 1/50 Pixel erreichbar.

Die Optik kann, je nach Anforderungen als fixfocus oder fokusierbare Optik ausgeführt sein, wobei letztere beispielsweise anhand der gemessenen Distanzinformation des Distanzmessers scharf gestellt werden kann. Im Falle einer stufenlosen oder stufigen Fokus- und/oder Zoom-Funktion ist besonders darauf zu achten, dass entsprechend der vorliegenden Erfindung der aktuelle Zoomfaktor als auch Ziellinienablauffehler bei der Kalibrierung und Messung entsprechend berücksichtigt wird.

Die Strahlengänge von Laser und Kamera werden in der Ausführungsform von Fig. 3 beispielsweise durch Spiegel in die schnelle, innere Achse eingespiegelt. Diese Konstellation, welche von jenem eines klassischen Theodolits abweicht, ist im mathematischen Kalibriermodell und insbesondere bei der Ausführung der Zwei-Lagenmessung mit einem Scanner zu berücksichtigen. Weiters ist die Aufstellung auf einem fest stehenden Stativ 9 und ein Beispiel für eine Zieltafel 2 mit Zielmarkierungen mit darauf gerichteter Zielachse 3 gezeigt, welche im Scanner 1 durch die Richtung des Laserstrahls zur Distanzmessung bestimmt wird.

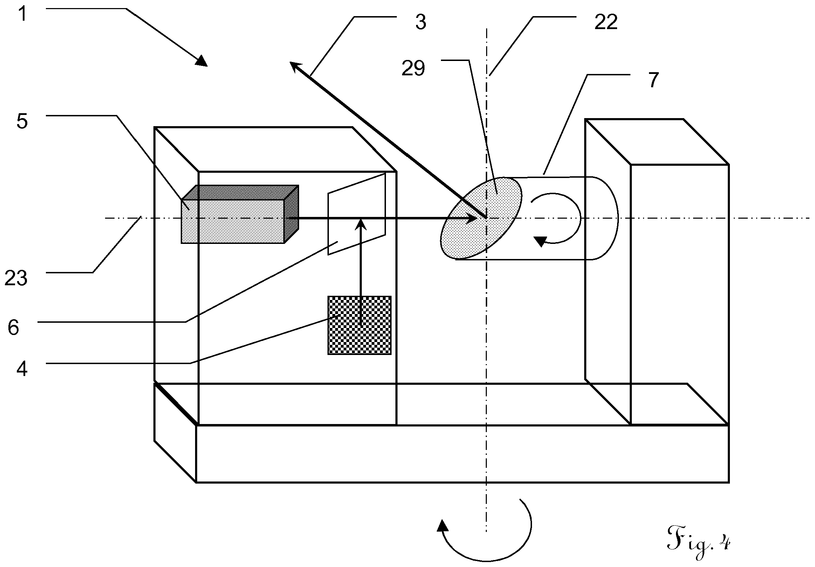

Fig. 4. zeigt eine weitere gebräuchlichen Ausführungsform zur Strahlablenkung in einem Scanner, bestehend aus einem Rotationskopf 7, welcher um die schnelle Achse 23 (Kippachse) rotierbar ist und eine schräge, spiegelnde Fläche 29 besitzt. Parallel zu dem vom Distanzmessmodul mit Laser 5 emittierten Messstrahl, ist die optische Achse des Sichtfelds einer (symbolisch dargestellten) Boresight-Kamera 4 in den Strahlengang mittels - vorzugsweise dichroitischem - Strahlteiler 6 eingespiegelt. Die Optische Achse der Kamera kann alternativ auch durch eine Hohlwelle von der gegenüberliegenden Achsenseite eingespiegelt werden, wodurch das Sichtfeld der Kamera zu jenem des Lasers diametral ist. Für den Prozess der erfindungsgemässen Genauigkeitsbestimmung und Kalibrierung ist dies bei entsprechender Berücksichtigung nicht von Bewandtnis. Es sind beide Konfigurationen der Strahlablenkung, sowie auch weitere alternative Ausführungsformen der Strahlführungen mit der vorliegenden Erfindung kompatibel.

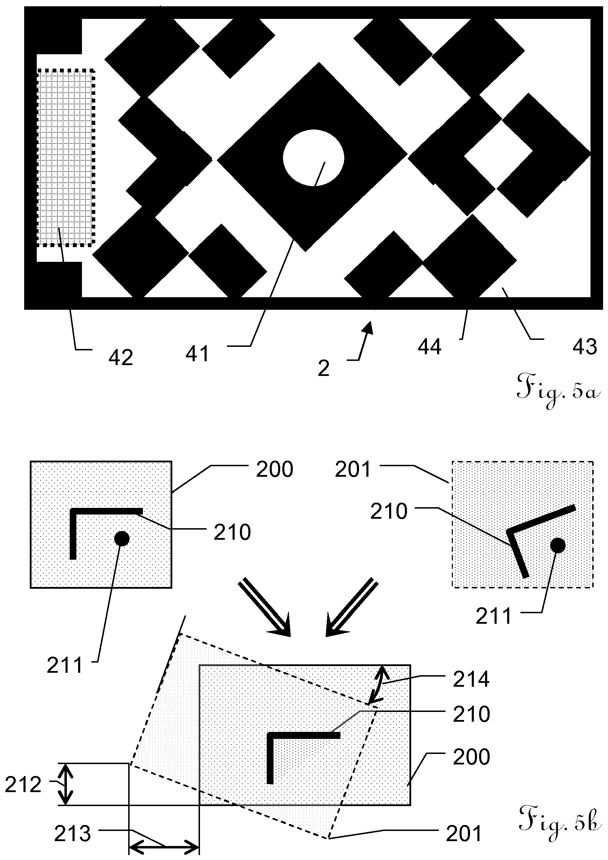

Fig. 5a. zeigt ein Beispiel einer graphischen Ausgestaltung einer entsprechend der vorliegenden Erfindung geeigneten Zielmarkierung(41,43,44) als Zieltafel 2, anhand welcher einige Merkmale einer solchen Zielmarke erläutert werden. Neben derartigen, speziellen Zieltafeln 2 können jedoch durchaus auch natürliche Ziele, welche in entsprechendem Masse die beschriebenen Merkmale erfüllen, Verwendung finden. Jedoch empfiehlt sich zur Erreichung höchster Genauigkeiten eine speziell auf diese Merkmale hin entworfene Zieltafeln 2 zu verwenden.

Die exemplarischen Zielmarkierungen(41,43,44) weisen einen geometrisch ausgezeichneten Symmetrie- oder Markierpunkt 41 auf. Das Zielobjekt mit Markierungen kann als ebene Zieltafel 2 oder als räumlich strukturiertes Zielobjekt 2 gestaltet sein. Ein Einsatz von dreidimensionalen Zielobjekten ist entsprechend der vorliegenden Erfindung jedoch nicht zwingend erforderlich.

Die zuvor erwähnte Markierung 41 soll hauptsächlich für die Kamera, aber auch für den Laser optimiert sein, also neben einer guten Erkennbarkeit auf dem Kamera-Bild auch den Laserstrahl des Entfernungsmessers zurückreflektieren. Beispielsweise ist in der Mitte der Zieltafel 2 eine weisse oder mit Reflexfolie versehene Zone 41, um den Messlaser des Scanners über den gesamten Strahlquerschnitt gleichmässig abzubilden und für den Entfernungsmesser und die Kamera entsprechend zurückzuwerfen.

Starke Helligkeitskontraste der Zielmarken (41,43,44) erleichtern der Steuer- und Auswerte-Software das automatische Auffinden der Zieltafel, Identifikation der Orientierung und Bestimmung der Koordinaten des Markierpunkts oder allgemeiner des Ursprungs des lokalen Koordinatensystems der Zieltafel und gewährleisten zugleich eine hohe Winkelauflösung in Azimut und Elevation. Beispielsweise hat das dargestellte Muster einen hohen Kontrast im Wellenlängenbereich der Kamera mit vielen Kanten und eine Grösse und Ausrichtung, sodass dieses ohne Aliasing über den gesamten empfohlenen Distanzbereich von der Kamera erfassbar ist. Das exemplarische Muster mit schwarzen 44 und weissen 43 geometrischen Figuren ist hierbei nur eine von vielen Varianten. Speziell für eine integrierte Kamera mit Fixfokusoptik dürfen die Muster nicht zu klein sein, damit auch gegebenenfalls unscharfe Bilder noch auswertbar sind.

Um die Ziele einzeln zu identifizieren, kann ein weiterer Bereich 42 vorgesehen sein, welcher einen Identifikationscode enthält und/oder eine Bestimmbarkeit der Orientierung der Tafel im Raum ermöglicht, welcher mittels des Kamerabildes entsprechend ausgewertet werden kann. Eine optionale, retroreflektierende Zone kann beispielsweise zum automatisierten Auffinden der Zieltafeln dienen.

Für weniger genaue Kalibrierungen genügt eine Zielmarke, die beispielsweise als pdf-Datei vom Hersteller bereitgestellt wird und welche vom Benutzer selbst mittels eines Druckers physikalisch reproduziert werden kann. Für höhere Genauigkeitsklassen wird eine stabile, formfeste Zieltafel 2 empfohlen, beispielsweise eine planar versteifte, selbstadhesive Folie oder eine Kunststoff- oder Metalltafel.

Fig. 5b. zeigt das Prinzip der Vermessung mittels vorgängig kalibrierter Kamera und Bildverarbeitung. Das Sichtfeld der Kamera, welches mit einer Auflösung von Bildpunkten oder Pixel durch einen Flächen-Bildsensor erfassbar wird, ist durch die Rechtecke 200 und 201 dargestellt. Das Sichtfeld 200 zeigt dabei das aufgenommene Bild in erster Lage und das Sichtfeld 201 jenes in zweiter Lage. Das Bild zeigt symbolisch als L-Symbol die lokalen Koordinatenachsen 210 einer betrachteten Zieltafel. Den Bezug (genau gültig für diese Aufstellung) zwischen den lokalen Koordinaten der Zieltafel (beispielsweise in gon) und den Pixelkoordinaten der Kamera kann mittels den Zielmarken (41,43,44) ermittelt werden. Das Muster entspricht einer Absolutkodierung für Richtung und Drehwinkel um die Zielachse, beispielsweise kann der Mittelpunkt des Kodiermusters zur Richtungsmessung und die Lage des Musters zur Drehwinkelerfassung um die Zielachse verwendet werden. Als Nullpunkt der Zielrichtung kann der Kameranullpunkt (mit rc=0 und ri=0) festgelegt werden, letzterer ist - wie weiter oben bereits beschrieben-beispielsweise mittels Zenitzielung durch die Richtung der Stehachse bestimmbar. Damit ist die Richtung 212,213 zur Zieltafel und deren Rotation oder Verkippung 214 genau definiert und vermessbar. In einem weiteren optionalen Schritt wird der Laser eingeschalten und auf dem Feld 41 wird für die Kamera die Laserzielachse als Lichtpunkt (Laserspot) 211 sichtbar. Die Bildverarbeitung berechnet anhand des in Bildkoordinaten vermessenen Lichtpunkts des Distanzmesslasers, die Winkellage der Ziellinie. Damit ist die Ausrichtung zwischen Laser und Kamera bekannt. Optional kann mit einer Distanzmessung zusätzlich die effektive Brennweite (Kammerkonstante) überprüft werden. Der Punkt 211 symbolisiert die Abbildung des Auftreffpunkts des Distanzmesslasers auf der Zielmarke durch die Kamera, der wie beschrieben in Kamerakoordinaten vermessbar ist, damit sind die beiden Richtungsparameter rc,ri des Lasers ermittelt und somit die effektive Scannerzielachse festgelegt.

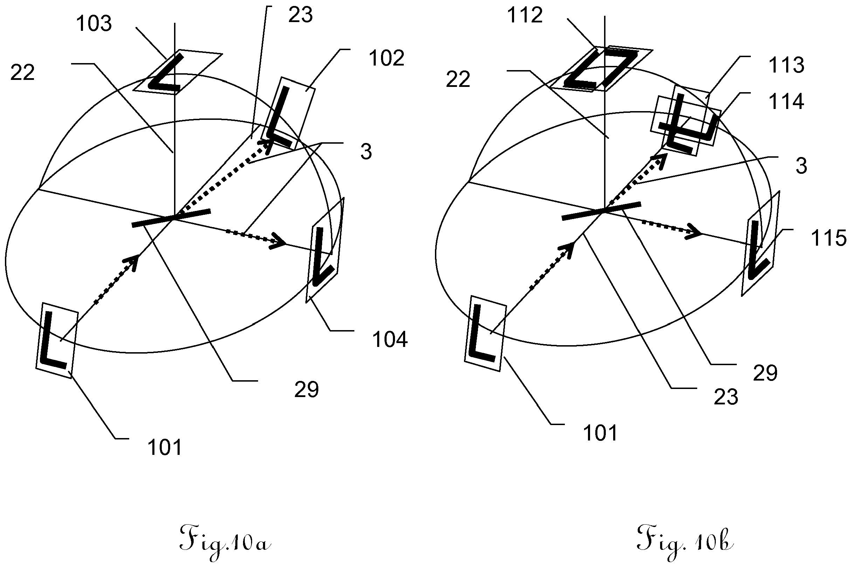

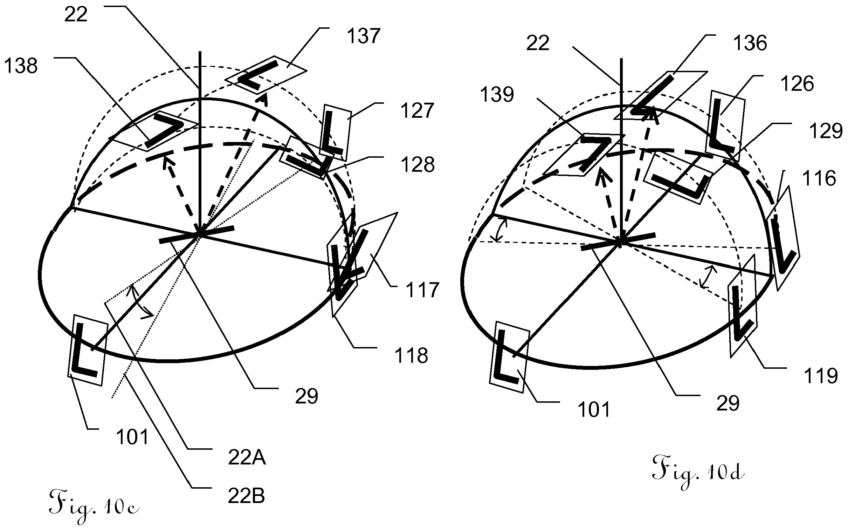

Da in beiden Scannerlagen dieselbe Zieltafel angemessen wird, korrespondieren die globalen Richtungskoordinaten Azimut (Hz) und Elevation/Visurwinkel (V) bei einem fehlerfreien Achsensystem. Bei fehlerbehafteten Achsen hingegen unterscheiden sich die mit der Kamera erfassten Richtungen und Objektverdrehungen zu erwarteten Transformationen eines fehlerfreien Systems. Beispielsweise könnten die Fehler wie illustrativ in der unteren Hälfte von Fig. 5b dargestellt durch eine Überlagerung der beiden Bilder aus erster und zweiter Lage ermittelt werden. Die Überlagerung ist derart gewählt, dass sich die lokalen Koordinatenachsen 210 der beiden Bilder 200 und 201 Überlagern. Die durch Masspfeile dargestellten Abmessungen illustrieren hierbei die dazu nötigen Bildtransformationen in Form von Translation und Rotation, wobei durchaus auch weitere Transformationen wie Skalierungen oder Bildverzerrungen bzw. -entzerrungen angewendet werden können. Translationen stehen im Zusammenhang mit V-Indexfehler und Kippachsenschiefe, wohingegen eine abweichende Objektrotation auf einen Winkelfehler des Ablenkspiegels Kippachse hindeutet. Alternativ zu diesem bildbasierten Auswerteverfahren, welches neben der Objektrichtung auch die Abweichung der erwarteten Verdrehung zur Zielachse erfasst, ist in den Erläuterungen zu Fig. 10 ein einfacheres rein richtungsbasiertes Verfahren beschrieben.

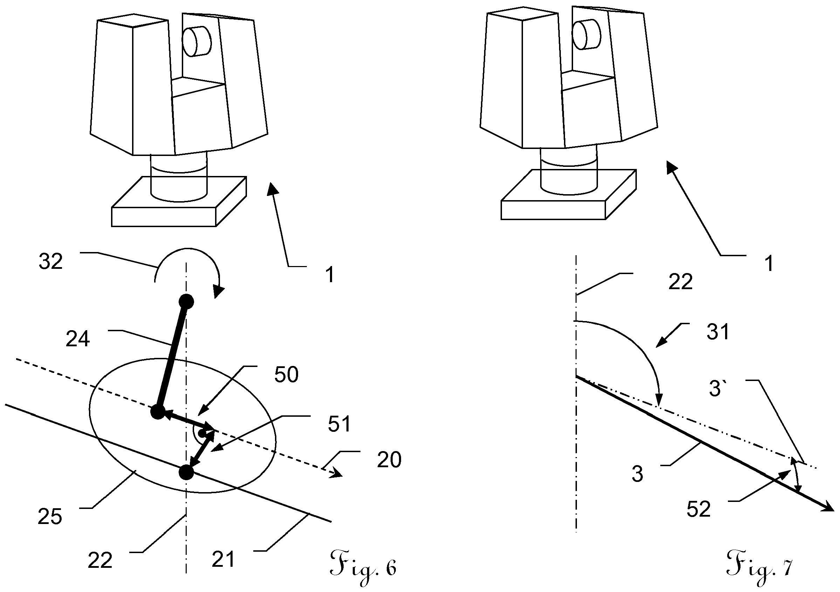

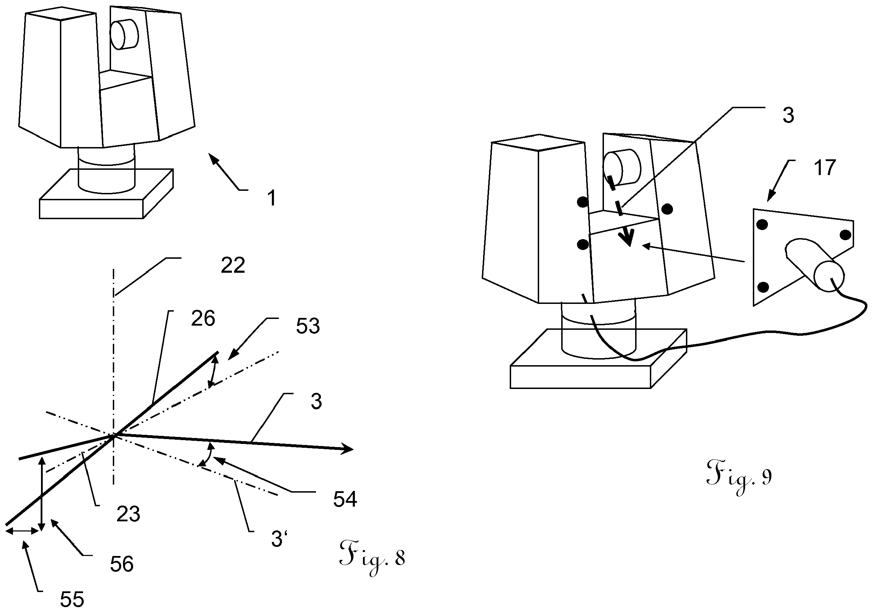

Fig. 6 stellt beispielhaft einen Scanner 1 dar, unter welchem dessen Achssystem sowie einige exemplarische Fehler und deren Auswirkungen zur Erläuterung schematisch dargestellt sind. Diese Darstellungsform wird in analoger Weise auch in Fig. 7 und Fig. 8 fortgesetzt.

Fig. 6 dient zur Erläuterung einer Neigungsmessung mit einem 2-Achsensensor. Gezeigt ist eine Messung der fehlerbehaftete Lotrichtung 24 trotz vertikaler Aufstellung des Geräts 1, die wahre Lotrichtung fällt dabei mit der Stehachse 22 zusammen. Längs- und Querfehler sind in einer Normalenebene zur Achse 22 mittels der Parallelen 20 zur Normalen 21 definiert. Für präzise und hochgenaue Messungen sind mit herkömmlichen Umschlagverfahren die Abweichungen in Längswinkel 50 und Querwinkel 51 relativ zur waren Lotrichtung 22 zu bestimmen. Der dazu verwendete Vorgang ist vergleichbar zu jenem bei einem herkömmlichen Theodoliten, bei welchen im Kalibrierungsvorgang der Winkeloffsets 50 und 51 anhand einer gemessenen Neigung bei einem willkürlichen Ausgangswinkel der Stehachse und bei einer um 200 gon (180°) verschwenkten Stehachse gemittelt/subtrahiert wird. Selbstverständlich können auch Messwerte in weiteren Verschwenkungswinkeln der Stehachse mit in Betracht gezogen werden um die erreichbare Genauigkeit zu erhöhen und/oder statistische Kennwerte zu bestimmen. Weiters ist in Fig. 6 die wahre Horizontalebene 25 dargestellt.

Anhand von Fig. 7 wird der Einfluss der Zielachsenabweichung in erfindungsgemässen Scannern 1 erläutert. Bei klassischen Vermessungsinstrumenten mit einem Fernrohr als Visiereinrichtung wird ein entfernter Zielpunkt in zwei Lagen mit exakter Ausrichtung angemessen, wodurch der so genannte V-Index als Konstante bestimmt werden kann. Bei 3D-Scannern 1 ist dies, wegen der fehlenden Fernrohr-Zieleinheit und dem äusserst umständlich auf Winkelsekunden genau ausrichtbaren Laserstrahl, in dieser Form kaum möglich. Eine genauere Analyse der Fehlereinflüsse auf die Winkelausrichtung des Laserstrahls zeigt zudem, dass der bei Fernrohrinstrumenten vorhanden Vertikalwinkelindex (V-Index) als Parameter zur Beschreibung dieses Fehlers nicht mehr in dieser einfachen Form existiert. Dies bedingt sich aus dem anders gearteten Aufbau und Verlauf des optischen Pfades der Zielachse im Gerät. Anstelle des bekannten Vertikalwinkelindex treten bei einem Scanner 1 andere Einflussparameter, welche den gemessenen Vertikalwinkel verfälschen, welche beim erfindungsgemässen Kalibrierverfahren entsprechend in Betracht gezogen werden.

Der Vertikalwinkel 31, bezogen auf die Stehachse 22 und Ziel- oder Laserachse 3, kann bei einem Scanner 1 zwar ebenfalls von der Winkelmessrichtung 3' um den Winkel 52 abweichen, jedoch ist dieser, bedingt durch die Geometrie der Strahlführung in einem Scanner 1 nicht mehr zwingend eine Konstante über den Elevationsbereich. Bei Scannern, insbesondere bei jenen, welchen die Laserquelle des Entfernungsmessers nicht mitverschenken, kann dieser von einer oder beiden Achspositionen abhängen. Dies muss entsprechend mathematisch modelliert und bei der Bestimmung der Richtung der fehlerhaften Winkelmessung 3' und der Kalibrierparameter berücksichtigt werden.

In Fig. 8 ist ein Kollimationsfehler 54 und eine Kippachsenschiefe 53 eines Scanners 1 dargestellt. Von klassischen Vermessungseinrichtungen mit Visiereinrichtung sind eine Kippachsenschiefe 53 und ein Kollimationsfehler 54 (Hz-Kollimation) als Parameter bekannt, welcher die horizontale Abweichung der Zielachse zu einem idealen 100 gon Winkel zur Kippachse 23 beschreiben.

In der Darstellung sind wiederum die Stehachse 22 und die Kippachse 23, sowie die Laserzielachse 3 dargestellt, welche von der theoretischen Soll-Zielachse 3', die in einer die Stehachse 22 enthaltenden Ebene, welche symmetrisch zur Kippachse 23 ist, in horizontaler Richtung um den Kollimationsfehler 54 abweicht. Weiters ist auch eine Kippachsenschiefe 53 der fehlerhaften Kippachse 26 gegenüber der theoretisch zu Stehachse 22 orthogonalen Kippachse 23 mittels dem Winkel 53 dargestellt.

In praktischen Systemen treten die hier jeweils für sich erläuterten Fehler meist nicht für sich allein, sondern in beliebiger Kombination auf.

Für den Scanner 1 braucht es ein neues, den Fehleinflüssen angepasstes Kalibriermodell zur quantitativen Beschreibung von Stehachse, Kippachse, Laserachse in Bezug auf die Kippachse 55,56 als schnelle Rotationsachse, Ablenkwinkel des Drehspiegels zur Rotationsachse und eventuell weiteren relevanten Achsen die die Relation zwischen den Winkelsensoren und der Zielachse betreffen. Als Zielachse wird dabei im Weiteren die das Instrument verlassende optische Achse des Laserstrahls betrachtet. Allfällige Achsenversätze, also Abstände zwischen den Achsen, wirken sich vor allem im Nahbereich aus, bei grossen Distanzen ist deren Einfluss in guter Näherung vernachlässigbar. Es wird hier angenommen, dass die Achsenversätze vom Hersteller gemessen und im Kalibrationsmodell berücksichtigt sind, somit ist diesbezüglich keine Feldkalibration notwendig.

Für den exemplarisch in Fig. 9 dargestellten Fall einer Ausführungsform, in welcher der Laserstrahl nicht mit der integrierten Kamera beobachtbar ist, beispielsweise aufgrund der Laserwellenlänge oder der geometrischen Anordnung, kann alternativ auch eine extern aufsteckbare oder bspw. in der Stütze integrierte Hilfsvorrichtung 17 dazu verwendet werden, die beiden Richtungswinkel rc,ri des Laserstrahls zur Stütze und zum aktuell gültigen V-Index zu messen. Dazu kann beispielsweise ein positionsempfindlicher Detektor (PSD) oder eine weitere Kamera sekundengenau an der Stütze aufgesteckt oder angebracht werden, um damit die Laserstrahlrichtung zusammen mit dem V-Winkel am Kippachsenwinkelsensor zu bestimmen. Die Hilfsvorrichtung 17 kann dabei an mehreren Stellen - unter verschiedenen V-Winkeln - auf das Gerät 1 aufgesteckt werden. Ein solcher Kollimator mit PSD-Sensor kann im Falle eines nicht mit der Kamera erfassbaren Laser-Spots zur hochgenauen Bestimmung der Strahlabweichung zur Sollrichtung der theoretischen Zielachse und/oder der optischen Achse der Kamera Verwendung finden. Alternativ zu PSD-Sensoren welche auf dem lateralen photoelektrischen Effekt beruhen, sind auch andere optische Lage-Sensoren zur Positionsbestimmung eines Lichtpunktes, wie etwa Photodioden, Quadratur-Photodioden, CCD/CMOS-Kameras, etc. anwendbar. Mittels der durch die aufsteckbare Hilfsvorrichtung 17 definierten und bekannten Richtungen, können alle Parameter des Kalibriermodells - inklusive Kameranullpunkt - eindeutig bestimmt werden, speziell wenn die Hilfsvorrichtung unter unterschiedlichen V-Winkeln anbringbar ist.

Entsprechend der vorangegangenen Darstellung, werden die mit einer Boresight-Kamera 4 beobachteten Achsenfehler, in Fig. 10a, 10b, 10c, 10d, weiter im Detail und anhand von konkreten Ausgestaltungsmöglichkeiten der erfindungsgemässen Prinzipien zur Kalibrierung eines Scanners 1 in Form von einer hierzu gebräuchlichen Hilfshalbkugel-Darstellung erläutert. Fig. 10a, 10b, 10c und 10d zeigen qualitativ, wie die Koordinaten der Zieltafelebene mit derjenigen der Kamera verknüpft sind.

Das erfindungsgemässe Feldkalibrierverfahren kann in unterschiedlichen Ausführungsformen und Varianten implementiert werden. Bei Zieltafeln 2 mit bekannten Koordinaten können diese in einer einzigen Scneraufstellung und in einer oder in beiden Lagen angemessen werden. Als erster Schritt kann die Laserausrichtung rc,ri - beispielsweise wie zuvor bereits beschrieben - mit der Kamera ermittelt und überprüft werden. Anschliessend können ohne Benutzung des Lasers mittels Achsenmodellen und Ausgleichsrechnung die Parameter wie Kameranullpunkt, V-Index, Kippachsenschiefe und Spiegelschiefe bestimmt werden. Diese mögliche Ausführungsform des Verfahrens ist recht einfach in der Durchführung, jedoch eher aufwendig in der Vorbereitung, da die Zieltafeln 2 beispielsweise mit einem Theodoliten vorgängig entsprechend genau eingemessen werden müssen.

Eine andere Ausführungsform des erfindungsgemässen Verfahrens kann auch mit nicht referenzierten Zieltafeln 2 eine Kalibrierung durchführen. Die Koordinaten der Zieltafeln sind in diesem Fall nicht bekannt. Eine erste Variante einer Erfindungsgemässen Kalibrierung wurde anhand von Fig. 5b bereits beschrieben, bei welcher neben den Richtungen auch Bilddrehungen auf Winkelsekunden genau mit der Kamera vermessen werden.

In einer weiter vereinfachten Variante des Prüfablaufs werden nur die Richtungen zu den Zieltafeln 2 gemessen. Es kann gezeigt werden, dass bei einem solchen Vorgehen - ohne die erfindungsgemässe Kamera-Vermessung - in einer einzigen Scneraufstellung - selbst mit einer Zwei-Lagenmessung - nicht alle Achsenparameter bestimmbar sind, da die bei der Ausgleichsrechnung benötigte Modellmatrix überraschenderweise singulär wird.

Bei Anwendung des erfindungsgemässen Verfahrens hingegen tritt dieses Problem nicht auf, da beispielsweise die Bestimmung der Achsenparameter von Laser- und Drehachsen getrennt behandelt werden können. Die Achsenparameter rc, ri der Laserrichtung können mittels Kamerabeobachtung des Laserpunktes auf der Zieltafel 2 oder mit einem Hilfsmittel 17 wie in Fig. 9 beschrieben ermittelt werden. Die mechanischen Achsenparameter wie pci, k und i werden in einer Zwei-Lagenmessung mittels Kamerazielung zu einer Anzahl von n Zieltafeln bestimmt. Eine einzige Aufstellung des Scanners gegenüber den Zieltafeln ist dabei ausreichend.

Fig. 10a zeigt in sphärischer Darstellung ein ideales Achsensystem mit Stehachse 22 und Kippachse 23 und dem zentralen Drehspiegel 29 welcher das Sichtfeld der Kamera und die Laser- oder Zielachse 3 ablenkt. Das "L"-Symbol 101 steht stellvertretend für das lokale Koordinatensystem der Kamera und ist jeweils entsprechend der Abbildung in der Sensorebene der Kamera dargestellt. Die beiden Richtungen des "L" können auch stellvertretend für mögliche Winkelabweichungen rc, ri der Strahlrichtung der Laserquelle zur schnellen Rotations- oder Kippachse angesehen werden. Mittels dieser Winkelablenkungen ist das lokale Koordinatensystem der Kamera auch in der Lage mögliche Laserstrahlabweichungen zu beschreiben. In Fig. 10a ist anhand des L-Symbols speziell die 100 gon Verschwenkung der lokalen Kamerakoordinaten am Target des zwischen einer horizontaler Zielung 104 bei V = 100 gon und einer Zenitzielung 103 bei V = 0 gon dargestellt.

Fig. 10b illustriert, weshalb eine Zwei-Lagenmessung bei einem Vertikalwinkel von V = 100 gon für die Parameterbestimmung der Laserstrahlrichtung rc, ri ungeeignet ist. Die Kamera-Koordinaten 101 und folglich auch die Laserstrahlrichtung aus beiden Messungen fallen entsprechend der Koordinatenachsen 115 zusammen. Das ist aus der klassischen Messung des Kollimationsfehlers in Theodoliten nicht bekannt und daher für einen Vermesser unerwartet. Bei V = 50 gon bzw. 350 gon, dargestellt durch die Zielachse 3, sind hingegen die Orientierungen der Kamerakoordinaten in erster und zweiter Lage gegenseitige um 100 gon verdreht, wie dies anhand der "L"-Symbole 113 (Lage 1) und 114 (Lage 2) ersichtlich ist und wodurch rc und ri - beispielsweise nach dem Verfahren von Fig. 6b - bestimmbar sind.

Die Fig. 10c zeigt in der Hilfshalbkugel ein Achssystem mit einem Kippachsenfehler, also eine zur Stehachse 22 verkippte innere Rotationsachse 22A in erster, bzw. 22B in zweiter Lage. Bei V = 100 gon sind die Target-Koordinaten auf der Kamera in erster und zweiter Lage gegeneinander verdreht, wie durch die "L"-Symbole 117 und 118 dargestellt. Mit zunehmender Elevation hin zu V = 0 gon (entlang der, mit einer unterbrochenen Linie dargestellten Bögen) fügt sich eine Translation hinzu, wie dies die lokalen Kamerakoordinaten am Target 127 und 128 bei V = 50 gon und die lokalen Kamerakoordinaten am Target 137 und 138 bei V = 0 gon illustrieren.

Wiederum etwas anders wirkt sich ein Winkelfehler des Drehspiegels aus, welcher in der Figur von Fig. 10d dargestellt ist. Der durch den Drehspiegel erzeugte Fehlereinfluss in Form eines Kegelfehlers bewirkt eine elevationsunabhängige, reine Translation der Targetposition in beiden Lagen. Dies ist durch die lokalen Kamerakoordinaten am Target 116, 126 und 136 in erster Lage sowie durch die korrespondierenden Koordinaten 119, 129 und 139 in zweiter Lage veranschaulicht, (jeweils wiederum entlang der mit unterbrochenen Linien gezeichneten Elevationsbögen).

In einem konkreten Ausführungsbeispiel kann beispielsweise die Kamera zum bestehenden Achsensystem, insbesondere zur Stehachse, neu kalibriert werden, indem der Scanner auf eine, in ca. 20 m Entfernung und in etwa im Horizont einsehbare Zieltafel zielt. Der Scanner verschwenkt sich raster- oder matrixförmig in kleinen Schritten über die Zieltafel. Dabei werden mit der zu kalibrierenden Kamera Bilder von der Zieltafel aufgenommen. Gleichzeitig werden die Winkelsensoren von Steh- und Kippachse (Hz, V) ausgelesen. Anschliessend bestimmt oder vermisst die Steuereinheit mittels Bildverarbeitung (Imageprozessing) die Target-Mittelpunkte (als ein Beispiel eines visuellen Merkmals der Zielmarke) in Pixeleinheiten des lokalen Koordinatensystems der Kamera. Aus diesem Datensatz bestehend aus Winkelsensorwerten und zugehörigen Kamera-Positionswerten wird die Transformation zwischen den Winkelsensoren (gon) und dem Koordinatensystem der Kamera (Pixel) mittels Ausgleichsrechnung ermittelt. Damit ist die Kamera auf Winkelsekundengenauigkeit oder besser kalibriert. Mit anderen Worten wird durch in Bezug setzen der Winkelsensorwerte mit den zugehörigen Vermessungsergebnissen aus den Bildinformationen eine Kalibrierung der Kamera durchgeführt. Dabei können auch durch das Gerätemodell gegebene geometrische Zwangsbedingungen einer Umschlagsmessung berücksichtigt werden.

Bei der Bildauswertung wird in bekannter Weise die Position der Abbildung einer Kante zwischen zwei angrenzenden Kontrastflächen der Zielmarke auf dem Bildsensor interpoliert, und dadurch in Sub-Pixel-Genauigkeit ermittelt. Damit kann anhand der Helligkeit eines Übergangs-Pixels zwischen zwei Kontrastflächen einer Zieltafel auf die Position der Kante innerhalb des Übergangs-Pixels geschlossen werden, die erreichbare Präzision liegt dabei typischerweise bei etwa 1/50 Pixel.

Als Nullpunkt im Kamerasystem kann beispielsweise die ideale Zielrichtung, die durch die Normale zum Achsenkreuz welches aus Stehachse und Kippachse gebildet wird, definiert werden. Da aber beide Systeme - Kameramodul und Laserquelle - am selben Drehkörper (im gezeigten Fall an der Stehachse) befestigt sind, besteht zwischen ihnen eine starre Verbindung. Aufgrund deren örtlichen Stabilität zueinander, kann der Kameranullpunkt als die fehlerfreie Laserzielrichtung festgelegt werden. Diese Art der Definition des Kameranullpunkts wurde bereits in Fig. 10a. beschrieben, wo die beiden Richtungen des "L"-Symbols stellvertretend für mögliche Winkelabweichungen rc, ri der Strahlrichtung der Laserquelle zur schnellen Rotations-oder Kippachse angesehen werden. Der bevorzugte Nullpunkt des lokalen Koordinatensystems der Kamera entspricht dabei der Ecke des "L"-Symbols.

Aus technischen Stabilitätsüberlegungen des Geräteaufbaus ist in vielen Fällen eine Kalibrierung der optischen Achse der Kamera (Nullpunkt) bezüglich den beiden Rotationsachsen nicht bei jeder Geräteaufstellung zwingend notwendig, da deren Anordnung meist sehr stabil ist. Die instabilsten Parameter mit hoher Sensitivität auf die erzielbare Punktgenauigkeit sind in der Regel die Winkelabweichungen des Lasers rc, ri, der Kippachse k, und des Rotationsspiegels pci sowie der V-Index i.

Für erfindungsgemässe Verfahren stellt das Instrument ein Softwareprogramm zur Verfügung, mittels welchem eine Neubestimmung der Kalibrierparameter anhand des beschrieben Verfahrens durch den Benutzer im Feld durchgeführt wird. Dem Benutzer kann dabei freigestellt werden, welche der Parameter des Geräts überprüft und welche durch einen Kalibriermessvorgang individuell neu zu bestimmen sind.

Im Folgenden wird ein Ausführungsbeispiel zur Fehlerbestimmung beschrieben, wobei von einer Zwei-Lagenmessung in einer Aufstellung ausgegangen wird. Die Daten zur Prüfung und Bestimmung Achsenfehler des Scanners umfassen lediglich die mit Kameraunterstützung gemessenen Richtungen. Dazu richtet der Scanner seine Kamera auf die vorgängig in der Umgebung angebrachten Zieltafeln, typisch etwa 1, 2, ... 8, 10 Stück. Diese werden jeweils in zwei Lagen von der Kamera aufgenommen, wobei wiederum gleichzeitig die Winkelsensoren von Steh- und Kippachse (Hz, V) ausgelesen werden. Es ist dabei darauf zu achten, dass für gut konfigurierte Beobachtungen die Zielpunkte unter verschiedenen Visurwinkeln einsehbar sein sollten. Die konkrete Anzahl der erforderlichen Zieltafeln und deren empfohlenen Aufstellungsorte hängen wesentlich von den zu bestimmenden Kalibrierparametern ab.

Als Ergebnis stehen die Winkelkoordinaten der geometrischen Mittelpunkte von allen Zielmarken für jeweils beide Scannerlagen ($Hz_I$, $V_I$) und ($Hz_{II}$, $V_{II}$) zur Verfügung. Auf die Bestimmung der weiter oben beschriebenen Verdrehungen der Zieltafeln zur Ziellinie wird in dieser beispielhaft erläuternden, einfachsten Ausführungsform des Verfahrens verzichtet. Wird gleichzeitig auch die Distanz erfasst, dann sind die vollständigen kartesischen Koordinaten, ($x_I$, $y_I$, $z_I$) und ($x_{II}$, $y_{II}$, $z_{II}$), bekannt bzw. aus den gemessenen Polarkoordinaten errechenbar.

In einem ersten Auswerteschritt können mit dem erfindungsgemässen Gerät mit Scanfunktionalität 1 allfällige Winkelabweichungen der Laserzielachse im Koordinatensystem der Kamera ermittelt werden. Besonders einfach ist dies für Scanner, bei denen Kamera und Laser in dieselbe Richtung ausgerichtet sind und der Laserspot von der Kamera erfassbar ist. Dabei wird der eingeschaltete Laser auf eine Zieltafel gerichtet und die Kamera vermisst den Mittelpunkt des Laserlichtflecks oder Laserspots auf der Zieltafel in Bildkoordinaten. Falls der Wellenlängenbereich des Lasers mit der Kamera nicht erfassbar ist, so kann die Zieltafel an zumindest einem dafür vorgesehenen Bereich zur Sichtbarmachung des Laserspots für die Kamera ausgebildet sein, beispielsweise durch eine im Laserlicht fluoreszierende Oberfläche oder dergleichen.

Bei Ausführungsformen von Scannern, bei welchen Laser und Kamera in den jeweils gegenüberliegenden Seiten der Stützen eingebaut sind und die optische Achse der Kamera und des Entfernungsmessers durch den Drehspiegel in jeweils unterschiedliche Richtungen abgelenkt werden, ist die Kalibrierung etwas aufwendiger. Es kann beispielsweise ein sekundengenaues optisches Umlenkmittel zu Hilfe genommen werden, um den Laser mit der Kamera erfassbar zu machen oder es kann der bei diesen Instrumenten zweiseitig benutzte Drehspiegel mit einer gewissen Resttransmitivität für das Laserlicht ausgestattet sein, sodass ein Teil der Laserstrahlung direkt auf die Kamera trifft und somit der Laserpunkt direkt sichtbar ist.

Die verbleibenden, noch zu bestimmenden Achsenparameter pci, k und i werden in einem zweiten Schritt ermittelt. Zur Auswertung der Messdaten einer Zwei-Lagenmessung und zur Neubestimmung der Kalibrierparameter sind - auch aus entsprechender Fachliteratur - mehrere konkrete Verfahren bekannt und einsetzbar. Es werden die korrespondierenden Datensätze aus Lage 1 und Lage 2 mittels Differenzbildung zueinander in Bezug gesetzt. Die Zwangsbedingungen aufgrund der geometrischen Gegebenheiten in Lage 1 und Lage 2 sind dabei implizit berücksichtigt.

Die Differenz von korrespondierenden Objektraum- oder Zieltafelkoordinaten definieren die Beobachtungen L zu:

$$3D : (\Delta x, \Delta y, \Delta z) = L3D$$

$$2D : (\Delta Hz, \Delta V) = L2D$$

wobei Hz = Azimut, V = Vertikalwinkel,
mit den Differenzen:

$$3D : \Delta x_k = x_{II_k} - x_{I_k}$$

$$\Delta y_k = y_{II_k} - y_{I_k}$$

$$\Delta z_k = z_{II_k} - z_{I_k}$$

$$2D : \Delta Hz_k = Hz_{II_k} - 200 - Hz_{I_k}$$

$$\Delta V_k = 400 - V_{II_k} - V_{I_k}$$

Als "2D" wird die Darstellung der Aufgabe in Polarkoordinaten bezeichnet, als "3D" jene im kartesischen Raum.

Als Ausgangslage zur mathematischen Parameterschätzung werden die Kalibrierparameter und die Messdaten in einem funktionalen Modell F zusammengefasst, beispielsweise in der Form F(L,X)=0, wobei L die Messgrössen (Beobachtungen) und X die gesuchten Parameter bedeuten. Mittels Optimierungsverfahren nach der Lehre der Ausgleichsrechnung wird ein neuer Parametersatz X gefunden indem F minimal gefordert wird. Die Ingenieursvermessung bedient sich oft der Ausgleichsrechnung nach Gauss-Markov oder den allgemeineren Modellen nach Gauss-Helmert. Dazu wird das Gleichungssystem F linearisiert, was zu einer Modellmatrix A (Jacobi-Matrix) und einer Normalgleichungsmatrix N führt. Der mathematische Ausdruck lautet dabei

$$L + v = A * X \; .$$

Dabei sind:

X = Vektor der unbekannten Parameter;

A = Design- oder Modellmatrix mit Messwerten, diese entsteht durch Ableitung des funktionalen Zusammenhangs nach den Parametern X;

L = Beobachtungen, Messwerte;

v = Residuen (auch Verbesserungen genannt).

Eine Forderung nach Minimierung der gewichteten Quadratsummen der Residuen an den gemessenen Beobachtungen führt zu einem Gleichungssystem der unbekannten Parameter. Als Ergebnis des neuen Gleichungssystems stehen die neu bestimmten Kalibrierparameter, beispielsweise der Kippachsenfehler k, der Spiegelfehler pci sowie der V-Index i. Die verbleibenden Differenzen zwischen modellierten und gemessenen Grössen werden als Residuen bezeichnet.

Die Residuen stellen eine Angabe der erzielten Messgenauigkeit dar. Alternativ kann die Angabe der Messgenauigkeit auch dem Arbeitsumfeld des Benutzers angepasst werden. Es sind also ebenso andere, zum Beispiel statistische Genauigkeitsangaben wie die Standardabweichung des Gesamtwinkels bestimmbar und auf dem Benutzerinterface darstellbar.

Zur Genauigkeitsermittlung wird eine a-posteriori-Varianz der neuen Residuen berechnet. Als Globaltest wird folgende Standardabweichung bezeichnet:

$$\sqrt{\frac{\sum\limits_{k} (\mathrm{Re}\,siduen_k)^2}{K - u}} = Varianz\ der\ Gewichtseinheit$$

mit K = Anzahl der Messungen, u = Anzahl Zwangsbedingungen.

Mit einem optionalen, zusätzlichen Rechenschritt sind dann auch die Kovarianzen der geschätzten Parameter verfügbar.

Anstatt, wie zuvor beschrieben, die Paare aus Messungen in zwei Lagen direkt zu vergleichen, können alle Beobachtungen auch unabhängig voneinander in einer Matrix A zusammengefasst werden. Die Restriktionen oder Zusatzforderungen einer Zwei-Lagenmessung, welche beispielsweise konstruktiv oder geometrisch gegeben sind, können dann als Bedingungsgleichungen, so genannten Zwangsbedingungen, in das Ausgleichsproblem aufgenommen werden. Die Zwangsbedingungen ergeben sich beispielsweise zu:

$$Hz_{II} - Hz_I = 200 gon$$

$$V_{II} + V_I = 400 gon$$

Auch für diesen Fall kann beispielsweise die Gauss-Helmert oder die Total-Least-Square Methode als Lösungsverfahren angewandt werden. Die Zwangsbedingungen werden dabei mittels Lagrange-Multiplikatoren in das Gleichungssystem der Ausgleichsrechnung eingebunden. Für den Fachmann ist klar, dass neben der gewichteten, quadratischen Ausgleichungsmethode auch andere Schätzfunktionen zur Herleitung von Systemparametern möglich sind.

Anhand der erfindungsgemäss ermittelten Kalibrierparameter können bei darauf folgenden Messungen online oder offline Korrekturen der Messwerte vorgenommen werden. Auch können anhand der statistischen Kennwerte aus der erfindungsgemässen Genauigkeitsüberprüfung Aussagen über die zu erwartende Genauigkeit der Messergebnisse einer konkreten Messung getätigt werden, was in der Praxis oftmals hilfreich oder gar erforderlich ist, insbesondere bei in diesem Gebiet neu eingeführten und noch unüblichen Messgeräten und Messmethoden.

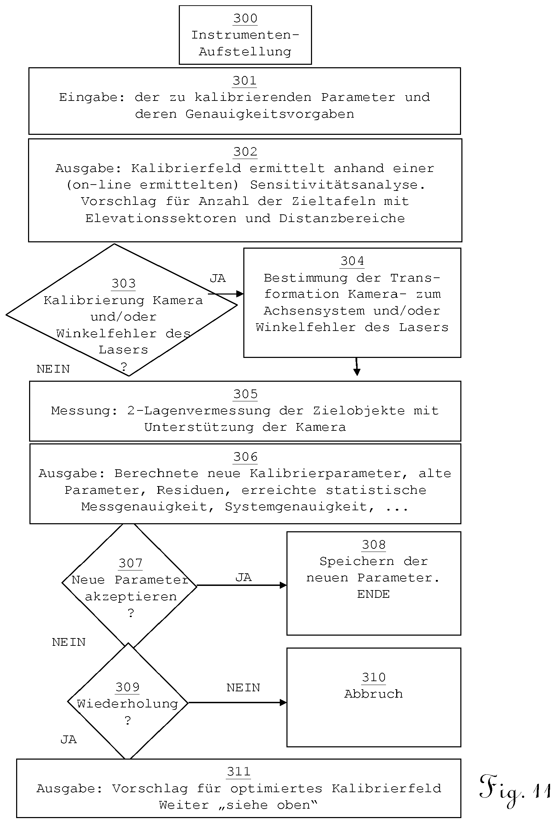

Fig. 11 zeigt ein Flussdiagramm einer beispielhaften Ablaufsequenz des erfindungsgemässen Prüf- und/oder Kalibrierverfahrens, welche insbesondere in Form einer interaktiven Benutzerführung dem Anwender von der Gerätesoftware mittels eines ein Bedieninterfaces zur Verfügung gestellt wird. Darin zeigen die Referenzzeichen:

300: Instrumenten-Aufstellung;

301: Eingabe: der zu kalibrierenden Parameter und deren Genauigkeitsvorgaben;

302: Ausgabe: Kalibrierfeld ermittelt anhand einer (online ermittelten) Sensitivitätsanalyse. Vorschlag für Anzahl der Zieltafeln mit Elevationssektoren und Distanzbereiche;

303: Auswahl: Kalibrierung Kamera und/oder Winkelfehler des Lasers? (JA/NEIN);

304: Bestimmung der Transformation Kamera- zum Achsensystem und/oder Winkelfehler des Lasers;

305: Messung: 2-Lagenvermessung der Zielobjekte mit Unterstützung der Kamera;

306: Ausgabe: Berechnete neue Kalibrierparameter, alte Parameter, Residuen, erreichte statistische Messgenauigkeit, Systemgenauigkeit, ...;

307: Auswahl: Neue Parameter akzeptieren? (JA/NEIN);

308: Speichern der neuen Parameter. ENDE;

309: Auswahl: Wiederholung? (JA/NEIN);

310: Abbruch;

311: Ausgabe: Vorschlag für optimiertes Kalibrierfeld: Weiter "siehe oben".

Im Detail erfolgt dabei in einem ersten Schritt 300 die Aufstellung des Gerätes wie dies bereits beschrieben wurde.

Anschliessend kann im Schritt 301 der Benutzer die zu kalibrierenden oder zu überprüfenden Parameter und/oder die dazugehörigen Genauigkeitsvorgaben eingeben, bzw. diese aus einer Reihe von vorgegebenen Datensätzen auswählen. Optional kann dem Instrument die Anzahl der zur Prüfung vorgesehenen Aufstellungen eingegeben werden.

Daraufhin bestimmt das Gerät im Schritt 302 anhand einer, insbesondere online ermittelten, Sensitivitätsanalyse ein Kalibrierfeld und schlägt dem Benutzer eine Anzahl aufzustellender Zieltafeln, sowie deren Elevationssektoren und Distanzbereiche vor, oder der Benutzer kann standortsbedingte, alternative Zieltafel-Aufstellungsorte vorschlagen, welche vom Gerät auf deren Anwendbarkeit zur Kalibrierung verifiziert werden.

Unter Sensitivitätsanalyse ist hierbei ein Vorgang zu verstehen, welcher - vereinfacht gesagt - verifiziert, dass eine Modellmatrix (oder Kofaktoren-Matrix genannt) des Gerätemodells, mit den im Kalibriervorgang ermittelten Messwerten nicht schlecht konditioniert ist oder gar singulär wird, was einer genauen Bestimmung der Winkelparameter entgegenstehen und eine potentiell hohe Standardabweichung zufolge hätte. Es wird einerseits die Sensitivität der zu ermittelnden Kalibrierparameter im Hinblick auf die vorgeschlagenen oder gewählten Zieltafelnaufstellungen anderseits deren Korrelationen untereinander analysiert. Entsprechend der Sensitivitätsanalyse können somit bevorzugte bzw. ungeeignete räumliche Konfigurationen der Zieltafeln beurteilt werden und somit gewährleistet werden, dass der Kalibriervorgang die vorgegebenen Genauigkeitsanforderungen zu erfüllen vermag.

Optional kann der Benutzer nun mit der Auswahl 303 den Schritt 304 der Kamera-Kalibrierung starten, welcher jedoch wie beschrieben in vielen Fällen nicht zwingend bei jedem Kalibriervorgang durchgeführt werden muss. Beispielsweise kann Schritt 304, bei dem die Kalibrierung der Kamera oder der Laserzielinie erfolgt, übersprungen werden.

Im Anschluss erfolgt in Schritt 305 die eigentliche Vermessung der zuvor aufgestellten oder ausgewählten Zieltafeln oder Zielobjekte in jeweils zwei Lagen, also jeweils in jenen zwei Ausrichtungen der beiden Geräteachsen, in welchen (im fehlerfreien Fall) derselben Zielpunkt angemessen wird. Dabei werden etwaige Fehler durch Auswertung der Kamerabilder mittels Bildbearbeitungssoftware erkannt und bestimmt. Aus den erkannten und mittels Kamera und Winkelmesseinrichtung der Achsen bestimmten Abweichungen wird infolge auch die Gerätegenauigkeit bestimmbar.

Es können nun in Schritt 306 neue Kalibrierparameter, Verbesserungen, statistische Kennwerte (wie etwa erreichte statistische Messgenauigkeit, Systemgenauigkeit, etc.) berechnet werden, Vergleiche mit den alten Kalibrierparametern bestimmt werden und eine Vielzahl weiterer Informationen bestimmt und gegebenenfalls auch dem Benutzer numerisch oder graphisch angezeigt werden.

Die ermittelten Kalibrierparameter und Genauigkeitsangaben können im Rahmen der Auswahl 307 vom Benutzer verifiziert und gegebenenfalls akzeptiert und für die darauf folgenden Messungen in Schritt 308 gespeichert werden. Falls die ermittelten Kalibrierparameter nicht die geforderten Genauigkeitsanforderungen erreichen, deren Werte auf Unzulänglichkeiten im Kalibriervorgang (bspw.

Erschütterungen, nichtoptimale Wahl der Aufstellungen der Zieltafeln, instabile Aufstellung des Gerätes oder der Zieltafeln, ungünstige Lichtverhältnisse oder andere Störeinflüsse) schliessen lassen oder derartige von der Gerätesoftware erkannt wurden, kann mittels der Auswahl 309 der Prüf- und Kalibriervorgang wiederholt werden oder der Kalibriervorgang mit Schritt 310 abgebrochen werden.

Eine Wiederholung in Schritt 311 kann dann gegebenenfalls mit einem entsprechend optimierten Kalibrierfeld beginnend bei Schritt 302 durchgeführt werden, wozu die Gerätesoftware dem Benutzer entsprechende Vorschläge unterbreiten kann. Alternativ kann auch lediglich die Messung in Schritt 305 wiederholt werden. Die ermittelten Genauigkeits- und Kalibrier-Informationen können infolge im Messbetrieb des Gerätes als Zusatzinformationen gemeinsam mit den bestimmten Messdaten gespeichert und bei deren Auswertung entsprechend berücksichtigt werden.

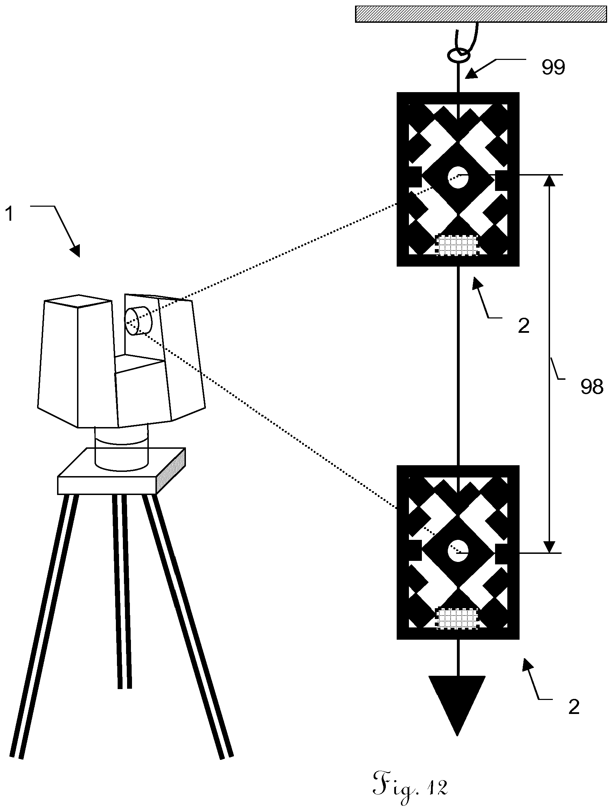

In einer beispielhaften Ausführungsform wie jener in Fig. 12 kann das Kalibrierziel mit zumindest zwei Zieltafeln aufgebaut sein, welche derart ausgebildet und angeordnet sind, dass sich diese bei deren Aufstellung schwerkraftbedingt lotrecht, mit einem definierten Abstand übereinander anordnen. Beispielsweise kann ein derartiges Kalibrierziel mit zwei Zieltafel 2 mit von der Kamera erfassbaren Kontrastflächen ausgeführt sein, welche in definiertem Abstand 98 zueinander an einer Lotschnur 99 oder einem Lotstock angebracht sind. Die beiden Zieltafel des Kalibrierziels können dabei auch auf einem gemeinsamen Träger ausgebildet sein, z.B. als eine länglichen Platte, welche in einem bekannten Abstand zueinander oben und unten jeweils ein von der Kamera vermessbares Kontrastflächenmuster aufweist und welches sich unter Einfluss der Schwerkraft lotrecht ausrichtet bzw. vom Benutzer lotrecht aufgestellt wird. Alternativ kann auch eine sich selbst horizontierende oder mittels einer Libelle oder Gravitationssensors horizontierbare Anordnung von zwei Zieltafel mit bekanntem Abstand zueinander angewandt werden. Bei einer beliebigen örtlichen Aufstellung des Geräts 1 und des Kalibrierziels relativ zueinander kann dabei mittels einer Vermessung der Kalibriertafeln 2 mittels der Kamera in zwei Lagen und Bestimmung der Distanz zwischen dem Gerät 1 und den Zieltafeln 2 eine Kalibrierung in einer einzigen Geräte- und Kalibrierziel-Aufstellung durchgeführt werden.

Zur Berechnung der Kalibrierparameter kann dabei angenommen werden, dass die Stehachse des Geräts senkrecht, also parallel zur lotrechten Anordnung der Zieltafeln 2, ist. Aus den Messdaten zusammen mit dem bekannten vertikalen Abstand 98 zwischen den beiden Zieltafel 2 ergibt sich dabei ein Dreieck (Zieltafel A - Scanner - Zieltafel B) mittels welchem (z.B. durch eine Ausgleichsrechnung) alle Winkelparameter des Achssystems bestimmt werden können, ohne dabei ein singuläres Gleichungssystem zu erhalten. Die Aufstellung der Kalibrierziele gegenüber dem Gerät muss dabei vorab nicht bekannt sein und kann z.B. vor einer Messung im Feld, also in jener Geräteaufstellung in welcher infolge auch die Messung durchgeführt wird, angepasst an die vorherrschenden örtlichen Gegebenheiten gewählt werden.

**Patentansprüche**

1. Feld-Kalibrierverfahren für ein, insbesondere in Polarkoordinaten messendes, Gerät mit Scanfunktionalität (1) mit

   • einer elektrooptischen Entfernungsmesseinrichtung (5) mit einer Laserachse als Zielachse (3),
   • einer motorisierten, optischen Ablenkeinheit (7) welche die Zielachse (3) um einen variablen Ablenkwinkel (32,33) gegenüber der Entfernungsmesseinrichtung (5) ablenkt, insbesondere wobei die Zielachse (3) durch einen gegenüber der Entfernungsmesseinrichtung beweglichen Spiegel abgelenkt wird, und
   • einer Winkelmesseinrichtung zur Bestimmung einer Winkelstellung (31,34) der Ablenkeinheit (7), **gekennzeichnet durch** die Schritte:

      ▪ erstes Vermessen von Winkel-Koordinaten einer Zielmarke (41,43,44) in einer ersten Winkelstellung (31,34) der Ablenkeinheit (7) als erster Lage und
      ▪ zweites Vermessen von Winkel-Koordinaten der Zielmarke (41,43,44) in einer zweiten Winkelstellung (31,34) der Ablenkeinheit (7) als zweiter Lage,
      wobei sich die erste Lage und zweite Lage unterscheiden, insbesondere wobei die erste Lage zur zweiten Lage in zwei Achsen derart rotiert ist, sodass die Zielachse in beiden Lagen zumindest annähernd in dieselbe Raumrichtung zeigt, wobei das erste und zweite Vermessen anhand von Bildern (200,201), welche mit einer Kamera (4) erfasst werden, deren optische Achse durch die

Ablenkeinheit (7) gegenüber der Kamera (4) abgelenkt wird, durchgeführt wird und ein Bestimmen von Kalibrierparametern basierend auf den Winkelstellungen (31,34) und den Winkel-Koordinaten in erster und zweiter Lage, insbesondere mittels einer Ausgleichsrechnung, erfolgt.

2. Das Verfahren nach Anspruch 1, **dadurch gekennzeichnet, dass**
das erste und zweite Vermessen der Zielmarke (41,43,44) mittels digitaler Bildverarbeitung in Bildkoordinaten der Kamera (4) erfolgt,
insbesondere wobei das Vermessen durch ein Bestimmen einer Richtung zu der Zielmarke (41,43,44) und/oder einer Verdrehung der Zielmarke (41,43,44) anhand der Bildkoordinaten sowohl in erster als auch in zweiter Lage erfolgt.

3. Das Verfahren nach Anspruch 2, **dadurch gekennzeichnet, dass**
das Vermessen mit einem Auflösen der Bildkoordinaten der Zielmarke (41,43,44) mit einer Auflösung von weniger als 5 Winkelsekunden, vorzugsweise von weniger als 1 Winkelsekunden, insbesondere mit einer Sub-Pixel Auflösung der Bilder (200,201),
erfolgt.

4. Das Verfahren nach einem der Ansprüche 1 bis 3, **dadurch gekennzeichnet, dass**
das Vermessen mit Vergleichen und in Uebereinstimmungbringen zumindest eines visuellen Merkmals (210) der Zielmarke (41,43,44) in den Bildern (200,201) aus erster und zweiter Lage erfolgt, vorzugsweise mit einer Sub-Pixel Auflösung des visuellen Merkmals in den Bildern.

5. Das Verfahren nach einem der Ansprüche 1 bis 4, **dadurch gekennzeichnet, dass**
das Ermitteln der Kalibrierparameter anhand eines mathematischen Gerätemodells erfolgt, welches den mechanischen Aufbau und die Strahlführung des Geräts (1) repräsentiert, insbesondere ein Gerätemodell welches als einen der Kalibrierparameter eine Richtungswinkelabweichung der unabgelenkten Laserachse zu einer Rotationsachse der Ablenkeinheit aufweist.

6. Das Verfahren nach einem der Ansprüche 1 bis 5, **gekennzeichnet durch**

- ein Distanzkalibrieren der Entfernungsmesseinrichtung (5) mittels einer im Gerät, insbesondere in der Entfernungsmesseinrichtung (5), integrierten Referenzstrecke,
- ein Messen einer Distanz (36) zu der Zielmarke (41,43,44) mit der distanzkalibrierten Entfernungsmesseinrichtung (5) in der ersten und der zweiten Lage und
- ein Einbeziehen dieser Distanzen (36) beim Ermitteln der Kalibrierparameter.

7. Das Verfahren nach einem der Ansprüche 1 bis 6, **gekennzeichnet durch**
ein Einmessen der Zielachse (3) in Bildkoordinaten der Kamera (5), insbesondere durch Ermitteln eines Auftreffpunkts (211) der Laserachse (3) auf der Zielmarke (2) mittels der Kamera (4).

8. Das Verfahren nach einem der Ansprüche 1 bis 7, **gekennzeichnet durch**
das Bestimmen der Kalibrierparameter des Geräts mit Scanfunktionalität (1) in seiner Feldaufstellung anhand von mehreren Zielmarken (41,43,44) und Vermessen derselben in jeweils erster und zweiter Lage, wobei das Kalibrierverfahren restationierungsfrei in einer einzigen Feldaufstellung des Geräts (1) mit unbekannter Position der Zielmarke (41,43,44) durchgeführt wird und wobei die Zielmarken (41,43,44) unter jeweils unterschiedlichen Visurwinkeln (102,103,104,112,113,114,115, 117,127,137,118,128,138,116,126,136,119,129,139) einsehbar sind, insbesondere wobei die Zielmarken (41,43,44) auf 2 bis 10 Zieltafeln (2) angebracht sind welche in unterschiedlichen Positionen zum Gerät mit Scanfunktionalität (1) aufgestellt sind.

9. Das Verfahren nach einem der Ansprüche 5 bis 8, **gekennzeichnet durch**
ein Ermitteln und Anzeigen eines empfohlenen Aufstellungsbereichs der Zielmarken (41,43,44) durch das Gerät (1), entsprechend der zu ermittelnden Kalibrierparameter und anhand des Gerätemodells.

10. Ein Gerät mit Scanfunktionalität (1), zur räumlichen Vermessung eines Objekts in Form einer Punktwolke, insbesondere ein in Polarkoordinaten messender 3D-Scanner (1), mit

- einer elektro-optischen Entfernungsmesseinrichtung (5), zur Ermittlung einer Distanz (36) in Richtung einer Zielachse (3),

• einer motorisierten Ablenkeinheit (7), zur variablen Winkelablenkung der Zielachse (3) gegenüber der Entfernungsmesseinrichtung (5), insbesondere mit zumindest einem relativ zur Zielachse (3) motorisiert beweglichen Spiegel (29),
• einer Messeinrichtung zur Ermittlung der Winkelablenkung (31,34) der Ablenkeinheit (7),
• einer Steuereinheit zur zumindest teilweise automatisierten Ausführung von Vermessungsaufgaben, insbesondere mit einem lokalen oder örtlich separierten Bedieninterface,

**dadurch gekennzeichnet, dass**
die Ablenkeinheit (7) derart ausgebildet ist, eine optische Achse einer Kamera (4) gegenüber der Kamera (4) abzulenken, und die Kamera (4) und die Steuereinheit derart ausgebildet sind, dass die Winkelablenkung (31,34) des Geräts mit Scanfunktionalität (1) anhand von mittels der Kamera (4) in mehreren unterschiedlichen Winkelablenkungen erfassten Bildern (200,201) von zumindest einer Zielmarke (41,43,44) in jeweils einer ersten Lage der Ablenkeinheit (7) und in einer zur ersten Lage unterschiedlichen zweiten Lage im Feld kalibriert wird, insbesondere wobei mit der Kamera (4) und Steuereinheit eine Winkelmessgenauigkeit in den erfassten Bildern von besser als 5 Winkelsekunden, vorzugsweise besser als 1 Winkelsekunden, erzielbar ist.

11. Das Gerät nach Anspruch 10,
**dadurch gekennzeichnet, dass**
die zweite Lage zur ersten Lage in zwei Achsen derart rotiert ist, sodass die Zielachse (3) in beiden Lagen zumindest annähernd in dieselbe Raumrichtung zeigt.

12. Das Gerät nach einem der Ansprüche 10 oder 11, **gekennzeichnet durch**
einen aufsetzbaren Kollimator (17), welcher derart ausgebildet ist, dass die, insbesondere mit der Kamera (4) unerfassbare, Zielachse (3) der Entfernungsmesseinrichtung (5) in ihrer Winkellage vermessbar ist, vorzugsweise einen Kollimator (17) mit PSD- oder optischen Lage-Sensor zur Vermessung der Zielachse (3) in mehreren Winkelstellungen (31,34) und/oder **dadurch gekennzeichnet, dass** die Steuereinheit derart ausgebildet ist, dass ein visuelles Merkmal (210) der Zielmarke (41,43,44) anhand der in mehreren Winkellagen (31,34) von der Kamera (4) erfassten Bildern (200,201) der Zielmarken (41,43,44) durch numerische Bildverarbeitung vermessbar ist, insbesondere wobei die Messeinheit anhand von Vermessungen mittels geometrischer Bildtransformationen, welchen das visuelle Merkmal (210) in den Bildern (200,201) aus einer ersten und einer zweiten Winkellage (31,34) in Übereinstimmung bringen, kalibrierbar ist.

13. Kalibrierziel zur Kalibrierung eines Geräts mit Scanfunktionalität (1) nach einem der Ansprüche 10 bis 12, mit einem Verfahren nach einem der Ansprüche 1 bis 9, wobei das Kalibrierziel zumindest zwei planare Kalibrierzieltafeln (2) mit

• einem visuellen Merkmal mit zumindest zwei aneinander angrenzenden Kontrastflächen (43,44), welche durch abwechslungsweise helle (43) und dunkle (44) Flächenbereiche gebildet werden,
• einem Laser-Reflektionsbereich (41), insbesondere mit einer retroreflektierenden Oberfläche, und
• einem Codebereich (42) mit einer, mittels einer Kamera (4) optisch auslesbaren, graphischen Codierung zur Identifikation der Zieltafel,

aufweist,
wobei die zumindest zwei Kalibrierzieltafeln (2) derart ausgebildet und angeordnet sind, dass sich diese mit einer bekannten Beabstandung zueinander schwerkraftbedingt lotrecht übereinander ausrichten, insbesondere wobei die Kalibrierzieltafeln hierzu an einem Lot angebracht sind.

14. Ein System aus einem Gerät mit Scanfunktionalität (1) nach einem der Ansprüche 10 bis 12 und zumindest einer Kalibrierzieltafel (2) nach Anspruch 13 zur Ausführung des Verfahrens nach einem der Ansprüche 1 bis 9.

15. Ein Computerprogrammprodukt mit Programmcode, der auf einem maschinenlesbaren Träger gespeichert ist oder Computer-Daten-Signal, verkörpert durch eine elektromagnetische Welle, zur Durchführung des Verfahrens nach einem der Ansprüche 1 bis 9, insbesondere wobei der Programmcode eine Führung des Benutzers durch die Prüf- und Kalibrationsmethode nach einem der Ansprüche 1 bis 9 ermöglicht, vorzugsweise wenn das Programm in einer Steuereinheit eines Geräts mit Scanfunktionalität (1) aufgeführt wird.

**Claims**

1. A field calibration method for a device, in particular measuring in polar coordinates, having a scan function (1), having

   • an electro-optical distance measuring device (5) with a laser axis as the target axis (3),
   • a motorized optical deflection unit (7), which deflects the target axis (3) by a variable deflection angle (32,33) with respect to the distance measuring device (5), in particular wherein the target axis (3) is deflected by a mirror which is movable with respect to the distance measuring device, and
   • an angle measurement device for determining an angular position (31,34) of the deflection unit (7),

   **characterized by** the steps:

   • a first survey of angle coordinates of a target mark (41, 43, 44) in a first angular position (31, 34) of the deflection unit (7) as the first face and
   • a second survey of angle coordinates of the target mark (41, 43, 44) in a second angular position (31, 34) of the deflection unit (7) as the second face,
   wherein the first face and second face differ, in particular wherein the first face is rotated relative to the second face in two axes such that the target axis in both faces points at least approximately in the same spatial direction,

   wherein
   the first and second surveys are carried out using images (200, 201), which are captured with a camera (4), the optical axis of which is deflected by the deflection unit (7) with respect to the camera (4), and a determination of calibration parameters is carried out on the basis of the angular positions (31, 34) and the angle coordinates in the first and second faces, in particular using an adjustment calculation.

2. The method as claimed in claim 1, **characterized in that**
   the first and second surveys of the target mark (41, 43, 44) are carried out using digital image processing in image coordinates of the camera (4),
   in particular wherein the survey is carried out by way of a determination of a direction to the target mark (41, 43, 44) and/or a rotation of the target mark (41, 43, 44) on the basis of the image coordinates both in the first and second faces.

3. The method as claimed in claim 2, **characterized in that**
   the survey is carried out with a resolution of the image coordinates of the target mark (41, 43, 44) with a resolution of less than 5 angular seconds, preferably of less than 1 angular second, in particular with a subpixel resolution of the images (200, 201).

4. The method as claimed in any one of claims 1 to 3, **characterized in that**
   the survey is carried out by comparing and matching at least one visual feature (210) of the target marks (41, 43, 44) in the images (200, 201) from the first and second faces, preferably with a subpixel resolution of the visual feature in the images.

5. The method as claimed in any one of claims 1 to 4, **characterized in that**
   the calibration parameters are ascertained on the basis of a mathematical device model, which represents the mechanical setup and the beam guidance of the device (1), in particular a device model having, as one of the calibration parameters, a direction angle deviation of the non-deflected laser axis with respect to a rotation axis of the deflection unit.

6. The method as claimed in any one of claims 1 to 5, **characterized by**

   • a distance calibration of the distance measuring device (5) using a reference section integrated in the device, in particular in the distance measuring device (5),
   • a measurement of a distance (36) from the target mark (41, 43, 44) using the distance-calibrated distance measuring device (5) in the first and in the second face, and
   • an incorporation of these distances (36) during the ascertainment of the calibration parameters.

7. The method as claimed in any one of claims 1 to 6, **characterized by**
   a calibration of the target axis (3) in image coordinates of the camera (5), in particular by way of ascertaining a point of incidence (211) of the laser axis (3) on the target mark (2) using the camera (4).

8. The method as claimed in any one of claims 1 to 7, **characterized by**
the determination of the calibration parameters of the device having a scan function (1) in its field setup on the basis of a plurality of target marks (41, 43, 44) and surveying the same in each case in the first and second face, wherein the calibration method is carried out, without re-stationing, in a single field setup of the device (1) with unknown position of the target mark (41, 43, 44), and wherein the target marks (41, 43, 44) can be seen under in each case different sight angles (102, 103, 104, 112, 113, 114, 115, 117, 127, 137, 118, 128, 138, 116, 126, 136, 119, 129, 139), in particular wherein the target marks (41, 43, 44) are applied to 2 to 10 target plates (2), which are set up in different positions with respect to the device having a scan function (1).

9. The method as claimed in any one of claims 5 to 8, **characterized by**
an ascertainment and display of a recommended setup region of the target marks (41, 43, 44) by the device (1), according to the ascertained calibration parameters and on the basis of the device model.

10. A device having a scan function (1), for spatially surveying an object in the form of a point cloud, in particular a 3D scanner (1) measuring in polar coordinates, having

- an electro-optical distance measuring device (5) for ascertaining a distance (36) in the direction of a target axis (3),
- a motorized deflection unit (7) for the variable angular deflection of the target axis (3) with respect to the distance measuring device (5), in particular having at least one mirror (29) which is movable by way of a motor relative to the target axis (3),
- a measurement device for ascertaining the angular deflection (31, 34) of the deflection unit (7),
- a control unit for the at least partially automated execution of surveying tasks, in particular having a local or spatially separate user interface,

**characterized in that**
the deflection unit (7) is configured to deflect an optical axis of a camera (4) with respect to the camera (4), and the camera (4) and the control unit are configured such that the angle deflection (31, 34) of the device having a scan function (1) is calibrated in the field on the basis of images (200, 201) of at least one target mark (41, 43, 44), captured by the camera (4) in a plurality of different angle deflections, in each case in a first face of the deflection unit (7) and in a second face, which is different to the first face, in particular wherein an angle measurement accuracy in the captured images of better than 5 angular seconds, preferably better than 1 angular second, is achievable using the camera (4) and control unit.

11. The device as claimed in claim 10,
**characterized in that**
the second face is rotated in two axes with respect to the first face such that the target axis (3) in both faces at least approximately points in the same spatial direction.

12. The device as claimed in any one of claims 10 or 11, **characterized by**
an add-on collimator (17), which is configured such that the target axis (3) of the distance measuring device (5), which target axis (3) in particular cannot be captured by the camera (4), is surveyable in its angular position, preferably a collimator (17) with PSD or optical position sensor for surveying the target axis (3) in a plurality of angular positions (31, 34), and/or **characterized in that**
the control unit is configured such that a visual feature (210) of the target marks (41, 43, 44) is surveyable on the basis of the images (200, 201) of the target marks (41, 43, 44), which are captured in a plurality of angular positions (31, 34) by the camera (4), by numerical image processing, in particular wherein the measurement unit is calibratable on the basis of surveys using geometrical image transformations, which bring the visual feature (210) in the images (200, 201) from a first and a second angular position (31, 34) into coincidence.

13. A calibration target for calibrating a device having a scan function (1) according to any one of claims 10 to 12, with a method as claimed in any one of claims 1 to 9, wherein the calibration target has at least two planar calibration target plates (2), having

- a visual feature with at least two adjoining contrast surfaces (43, 44), which are formed by alternately bright (43) and dark (44) surface regions,

• a laser reflection region (41), in particular having a retroreflective surface, and
• a code region (42) having a graphical coding for identification of the target plate, which can be read out optically using a camera (4),

wherein the at least two calibration target plates (2) are configured and arranged such that they orientate themselves owing to gravity such that they are perpendicular one above the other with a known distance to one another, in particular wherein the calibration target plates to this end are attached to a plumb.

14. A system of a device having a scan function (1) as claimed in any one of claims 10 to 12 and at least one calibration target plate (2) as claimed in claim 13 for carrying out the method as claimed in any one of claims 1 to 9.

15. A computer program product with program code, which is stored on a machine-readable carrier or computer data signal, embodied by an electromagnetic wave, for carrying out the method as claimed in any one of claims 1 to 9, in particular wherein the program code permits guidance of the user through the check and calibration method as claimed in any one of claims 1 to 9, preferably when the program is carried out in a control unit of a device having a scan function (1).

**Revendications**

1. Procédé d'étalonnage de champ pour un appareil à fonction de balayage (1), mesurant en particulier en coordonnées polaires, avec

• un dispositif télémétrique (5) électro-optique avec un axe laser comme axe de visée (3),
• une unité de déviation (7) optique motorisée qui dévie l'axe de visée (3) d'un angle de déviation (32, 33) variable par rapport au dispositif télémétrique (5), l'axe de visée (3) étant en particulier dévié par un miroir mobile par rapport au dispositif télémétrique, et
• un dispositif de mesure d'angle destiné à la définition d'une position angulaire (31, 34) de l'unité de déviation (7),

**caractérisé par** les étapes suivantes :

• première mesure de coordonnées angulaires d'un repère de visée (41, 43, 44) dans une première position angulaire (31, 34) de l'unité de déviation (7) en tant que premier emplacement, et
• deuxième mesure de coordonnées angulaires du repère de visée (41, 43, 44) dans une deuxième position angulaire (31, 34) de l'unité de déviation (7) en tant que deuxième emplacement, le premier emplacement et le deuxième emplacement étant différents, en particulier le premier emplacement étant tourné dans deux axes par rapport au deuxième emplacement de telle sorte que l'axe de visée dans les deux emplacements est dirigé approximativement dans la même direction de l'espace,

la première et la deuxième mesure étant effectuées à l'aide d'images (200, 201) qui sont captées avec une caméra (4) dont l'axe optique est dévié par rapport à la caméra (4) par l'unité de déviation (7), et une définition de paramètres d'étalonnage s'effectuant sur la base des positions angulaires (31, 34) et des coordonnées angulaires dans le premier et le deuxième emplacement, en particulier au moyen d'un calcul de compensation.

2. Procédé selon la revendication 1, **caractérisé en ce que**
la première et la deuxième mesure du repère de visée (41, 43, 44) s'effectuent au moyen d'un traitement d'images numérique en coordonnées d'images de la caméra (4),
la mesure s'effectuant en particulier par une définition d'une direction vers le repère de visée (41, 43, 44) et/ou d'une rotation du repère de visée (41, 43, 44) à l'aide des coordonnées d'images aussi bien dans le premier emplacement que dans le deuxième emplacement.

3. Procédé selon la revendication 2, **caractérisé en ce que**
la mesure s'effectue en donnant aux coordonnées d'images du repère de visée (41, 43, 44) une résolution inférieure à 5 secondes d'arc, de préférence inférieure à 1 seconde d'arc, en particulier avec une résolution sub-pixellaire des images (200, 201).

4. Procédé selon l'une des revendications 1 à 3, **caractérisé en ce que**
la mesure s'effectue par la comparaison et la mise en concordance d'au moins une caractéristique visuelle (210) du repère de visée (41, 43, 44) dans les images (200, 201) en provenance d'un premier et d'un deuxième emplacement, de préférence avec une résolution sub-pixellaire de la caractéristique visuelle dans les images.

5. Procédé selon l'une des revendications 1 à 4, **caractérisé en ce que**
la détermination des paramètres d'étalonnage est effectuée à l'aide d'un modèle d'appareil mathématique qui représente la structure mécanique et le guidage de faisceau de l'appareil (1), en particulier un modèle d'appareil qui, en tant que paramètres d'étalonnage, présente une divergence d'angle de direction de l'axe laser non dévié par rapport à un axe de rotation de l'unité de déviation.

6. Procédé selon l'une des revendications 1 à 5, **caractérisé par**

   • un étalonnage de distance du dispositif télémétrique (5) au moyen d'un tronçon de référence intégré dans l'appareil, en particulier dans le dispositif télémétrique (5),
   • une mesure d'une distance (36) par rapport au repère de visée (41, 43, 44) avec le dispositif télémétrique (5) étalonné en distance dans le premier et le deuxième emplacement, et
   • une intégration de ces distances (36) lors de la détermination des paramètres d'étalonnage.

7. Procédé selon l'une des revendications 1 à 6, **caractérisé par**
une prise de mesure de l'axe de visée (3) dans des coordonnées d'images de la caméra (5), en particulier par la détermination d'un point d'impact (211) de l'axe laser (3) sur le repère de visée (2) au moyen de la caméra (4).

8. Procédé selon l'une des revendications 1 à 7, **caractérisé par**
la définition des paramètres d'étalonnage de l'appareil à fonction de balayage (1) dans son implantation dans le champ à l'aide de plusieurs repères de visée (41, 43, 44) et mesure de ceux-ci dans respectivement un premier et un deuxième emplacement, le procédé d'étalonnage étant réalisé sans redéploiement dans une implantation unique dans le champ de l'appareil (1) avec une disposition inconnue du repère de visée (41, 43, 44), et les repères de visée (41, 43, 44) étant visibles selon différents angles de contact visuel rectiligne (102, 103, 104, 112, 113, 114, 115, 117, 127, 137, 118, 128, 138, 116, 126, 136, 119, 129, 139), les repères de visée (41, 43, 44) étant en particulier mis en place sur 2 à 10 plaques de visée (2) qui sont implantées dans différentes dispositions par rapport à l'appareil à fonction de balayage (1).

9. Procédé selon l'une des revendications 5 à 8, **caractérisé par**
une détermination et un affichage d'une zone d'implantation recommandée des repères de visée (41, 43, 44) par l'appareil (1) en fonction des paramètres d'étalonnage à déterminer et à l'aide du modèle d'appareil.

10. Appareil à fonction de balayage (1), destiné à la mesure dans l'espace d'un objet sous la forme d'un nuage de points, en particulier un scanner 3D (1) mesurant en coordonnées polaires, avec

    • un dispositif télémétrique (5) électro-optique destiné à la détermination d'une distance (36) en direction d'un axe de visée (3),
    • une unité de déviation (7) motorisée destinée à la déviation angulaire variable de l'axe de visée (3) par rapport au dispositif télémétrique (5), en particulier avec au moins un miroir (29) mobile de façon motorisée par rapport à l'axe de visée (3),
    • un dispositif de mesure destinée à la détermination de la déviation angulaire (31, 34) de l'unité de déviation (7),
    • une unité de commandée destinée à l'exécution au moins partiellement automatisée de tâches de mesure, en particulier avec une interface utilisateur locale ou séparée localement,

    **caractérisé en ce que**
    l'unité de déviation (7) est constituée de façon à dévier un axe optique d'une caméra (4) par rapport à la caméra (4), et la caméra (4) et l'unité de commande sont constituées de telle sorte que la déviation angulaire (31, 34) de l'appareil à fonction de balayage (1) est étalonnée dans le champ à l'aide d'images (200, 201) d'au moins un repère de visée (41, 43, 44) captées au moyen de la caméra (4) dans plusieurs déviations angulaires différentes dans respectivement un premier emplacement de l'unité de déviation (7) et dans un deuxième emplacement différent par rapport au premier emplacement, une précision de mesure d'angle dans les images captées meilleure que 5 secondes d'arc, de préférence meilleure que 1 seconde d'arc, pouvant en particulier être obtenue avec la caméra (4) et l'unité de commande.

11. Appareil selon la revendication 10,

**caractérisé en ce que**

le deuxième emplacement est, par rapport au premier emplacement, tourné dans deux axes de telle sorte que l'axe de visée (3) dans les deux emplacements est dirigé au moins approximativement dans la même direction dans l'espace.

12. Appareil selon l'une des revendications 10 ou 11,
**caractérisé par**
un collimateur (17) pouvant être monté qui est constitué de telle sorte que l'axe de visée (3), en particulier non captable avec la caméra (4), du dispositif télémétrique (5) peut être mesuré dans son emplacement angulaire, de préférence un collimateur (17) avec capteur d'emplacement PSD ou optique pour la mesure de l'axe de visée (3) dans plusieurs positions angulaires (31, 34) et/ou
**caractérisé en ce que**
l'unité de commande est constituée de telle sorte qu'une caractéristique visuelle (210) du repère de visée (41, 43, 44) peut être mesurée par traitement d'images numérique à l'aide d'images (200, 201) des repères de visée (41, 43, 44) captées par la caméra (4) dans plusieurs emplacements angulaires (31, 34), l'unité de mesure pouvant en particulier être étalonnée à l'aide de mesures au moyen de transformations géométriques d'images qui mettent en concordance la caractéristique visuelle (210) dans les images (200, 201) en provenance d'un premier et d'un deuxième emplacement angulaire (31, 34).

13. Cible d'étalonnage destinée à l'étalonnage d'un appareil à fonction de balayage (1) selon l'une des revendications 10 à 12,
avec un procédé selon l'une des revendications 1 à 9, la cible d'étalonnage présentant au moins deux plaques de visée d'étalonnage (2) planes avec

• une caractéristique visuelle avec au moins deux surfaces de contraste (43, 44) limitrophes entre elles qui sont formées alternativement par des zones de surface claires (43) et sombres (44),
• une zone de réflexion laser (41), en particulier avec une surface rétro-réfléchissante, et
• une zone de code (42) avec un codage graphique, lisible optiquement au moyen d'une caméra (4), en vue de l'identification de la plaque de visée,

les au moins deux plaques de visée d'étalonnage (2) étant constituées et disposées de telle sorte qu'elles s'alignent perpendiculairement l'une au-dessus de l'autre sous l'action de la gravité avec un espacement connu entre elles, en particulier les plaques de visée d'étalonnage étant pour cela mises en place sur un fil à plomb.

14. Système composé d'un appareil à fonction de balayage (1) selon l'une des revendications 10 à 12, et d'au moins une plaque de visée d'étalonnage (2) selon la revendication 13 pour la réalisation du procédé selon l'une des revendications 1 à 9.

15. Produit logiciel avec code de programme qui est enregistré sur un support lisible par machine ou signal de données ordinateur, matérialisé par une onde électromagnétique, pour la réalisation du procédé selon l'une des revendications 1 à 9, le code de programme permettant en particulier un guidage de l'utilisateur par la méthode de contrôle et d'étalonnage selon l'une des revendications 1 à 9, de préférence quand le programme est réalisé dans une unité de commande d'un appareil à fonction de balayage (1).

Fig. 1

EP 2 707 745 B1

Fig. 2a

Fig. 2b

EP 2 707 745 B1

Fig. 3

EP 2 707 745 B1

Fig. 4

EP 2 707 745 B1

Fig. 5a

Fig. 5b

32

32

24

50

51

20

25

22    21

Fig. 6

1

22

31

3`

3

52

Fig. 7

1

Fig. 8

Fig. 9

EP 2 707 745 B1

EP 2 707 745 B1

Fig.10a

Fig. 10b

Fig. 10c

Fig. 10d

EP 2 707 745 B1

**300**
Instrumenten-
Aufstellung

**301**
Eingabe: der zu kalibrierenden Parameter und
deren Genauigkeitsvorgaben

**302**
Ausgabe: Kalibrierfeld ermittelt anhand einer
(online ermittelten) Sensitivitätsanalyse.
Vorschlag für Anzahl der Zieltafeln mit
Elevationssektoren und Distanzbereiche

**303**
Kalibrierung Kamera
und/oder
Winkelfehler des
Lasers
?

JA

**304**
Bestimmung der Transformation Kamera- zum
Achsensystem und/oder
Winkelfehler des Lasers

NEIN

**305**
Messung: 2-Lagenvermessung der Zielobjekte mit
Unterstützung der Kamera

**306**
Ausgabe: Berechnete neue Kalibrierparameter, alte
Parameter, Residuen, erreichte statistische
Messgenauigkeit, Systemgenauigkeit, ...

**307**
Neue Parameter
akzeptieren
?

JA

**308**
Speichern der
neuen Parameter.
ENDE

NEIN

**309**
Wiederholung
?

NEIN

**310**
Abbruch

JA

**311**
Ausgabe: Vorschlag für optimiertes Kalibrierfeld
Weiter „siehe oben"

Fig. 11

37

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202006005643 U1
- US 2009147319 A
- US 7623224 B
- US 2011023578 A